# EUROPEAN PATENT APPLICATION

(11) **EP 4 261 326 A1**
(43) Date of publication of application: **18.10.2023**
(21) Application number: 23166634.8
(22) Date of filing: 04.04.2023
(51) Int. Cl.: C25B 1/04, C25B 9/60, C25B 9/70, H01M 4/04, H01M 8/02, C25B 9/65

(54) **A SINGLE SHEET BIPOLAR PLATE FOR CELL STACK ASSEMBLY AND METHOD OF MAKING AND USING THE SAME**

(30) Priority: 06.04.2022 US 202263328124 P
(71) Applicant: Hydrogenics Corporation, Mississauga, ON L5T 2N6 (CA)
(72) Inventor: Shivastava, Akhil, Brampton, L7A 4N2 (CA); Sinanan, Anson, Brampton, L7A 4N2 (CA); Murugan, Ganesh Raj Mani, Mississauga, L5M 6E9 (CA); Thirunavukkarasu, Naveen Prakash, Lasalle, N9J 2Z7 (CA)
(74) Representative: Pinnington, Giles Oliver

(57) **Abstract**

The present disclosure is directed to a single sheet electrochemical cell bipolar plate for stack assembly comprising a single sheet of formable material having an anode side and a cathode side opposite the anode side, wherein the anode side and the cathode side have a different structural configuration, a plurality of water channels on the anode side, a plurality of hydrogen channels on the cathode side, a plurality of lands comprise a groove and a flange, and a seal positioned within the flange to provide a variable groove depth for the land.

## Description

### TECHNICAL FIELD

The present disclosure is directed to a single sheet bipolar plate for cell stack assembly and methods of making and using the same.

### BACKGROUND

Electrochemical cells and electrolytic cells provide chemical reactions that include electricity. For example, a fuel cell uses hydrogen and oxygen to produce electricity. An electrolyzer uses water and electricity to produce hydrogen and oxygen.

An electrolyzer comprises one or more electrolytic cells that utilize electricity to chemically produce substantially pure hydrogen and oxygen from water. Often the electrical source for the electrolyzer is produced from power or energy generation systems. In turn, the pure hydrogen produced by the electrolyzer is often utilized as a fuel or energy source for those same power generation systems, such as fuel cell systems.

The typical electrolytic cell, also referred to as an "electrolyzer cell," is comprised of many assemblies compressed and bound into a stack. An electrolytic cell includes a multi-component membrane electrode assembly (MEA) that has an anode, a cathode, and an electrolyte. Typically, the anode, cathode, and electrolyte of the membrane electrode assembly (MEA) are configured in a multi-layer arrangement that enables the electrochemical reaction to produce hydrogen via contact with one or more gas diffusion layers. A gas diffusion layer (GDL) and/or a porous transport layer (PTL) is typically located on one or both sides of the MEA. Bipolar plates (BPP) often reside on either side of the GDLs and separate the individual electrolytic cells of the stack from one another.

In tradition electrolyzers, adjacent bipolar plates (BPP) house the MEA (e.g., anode, cathode, electrolyte) and the gas diffusion layer (GDL) such that overall alignment of the cell components is maintained for optimal operation and performance of the electrolyzer. Electrolyzer cell component alignment is important to ensure that cell-to-cell features, such as manifolds and active regions, as well as external interfacing devices, are compatible with the full electrolyzer stack assembly. Therefore, reduction of such layered components within the MEA of an electrolyzer cell to improve the contact, alignment, and heat retention and/or transfer within and between the electrolytic cells would be beneficial to improve operation and performance of electrolyzers. Accordingly, it would be advantageous to provide an electrolyzer assembly having reduced component layers.

The present disclosure is directed to a single sheet bipolar plate for stack assembly to address this unmet need. Specifically, the present single sheet bipolar plate for stack assembly provides flow and sealing management solutions that include variable flow depths, cross-directional reactant flow, and reactant sealing, which are an improvement over current electrolyzer technologies. Additionally, the present single sheet bipolar plate for stack assembly also improves heat transfer and/or retention, reduces pressure drop, maintains mechanical resistance to collapse, as well as precise alignment of cell-to-cell features with reduced expense.

### SUMMARY

Embodiments of the present disclosure are included to meet these and other needs. The present disclosure is directed to an electrochemical cell bipolar plate for stack assembly including a single sheet of formable material, a plurality of water channels, a plurality of hydrogen channels, a plurality of lands, and a seal. The electrochemical cell may be a fuel cell or an electrolyzer cell.

The single sheet of formable material has an anode side and a cathode side opposite the anode side, and the anode side and the cathode side have a different structural configuration. The formable material may be an electrically conductive material. The electrically conductive material may be metal. The different configuration may be an offset configuration or a complementary configuration.

The plurality of water channels are on the anode side, while the plurality of hydrogen channels are on the cathode side. The water channels and the hydrogen channels have a cross-flow configuration. The water channels may include water distribution channels or water main flow field channels. Likewise, the hydrogen channels may include hydrogen distribution channels or hydrogen main flow field channels.

The plurality of lands provide the water channels and the hydrogen channels. Each of the lands comprise a groove and a flange. Two or more of the grooves may be sealing grooves.

The seal is positioned within the flange to provide a variable groove depth for the land. The seal may be an inner seal or an outer seal. The seal may close the anode side and the cathode side of the electrochemical cell bipolar assembly plate to form a closed system.

The present disclosure is also directed to an electrochemical cell bipolar plate for stack assembly including a single sheet of formable material, a plurality of water channels, and a plurality of hydrogen channels. The electrochemical cell may be a fuel cell or an electrolyzer cell.

The single sheet of formable material includes an anode side and a cathode side opposite the anode side. The anode side and the cathode side have a different structural configuration. The formable material may be a metallic or non-metallic electrically conductive material. The metallic electrically conductive material may include titanium, nickel, aluminum, steel, or combinations thereof. The steel may be stainless steel. The different configuration may include an offset configuration or a complementary configuration

The plurality of water channels include a plurality of humps on the anode side. The plurality of hydrogen channels include a plurality of cavities on the cathode side. The water channels and the hydrogen channels have a cross-flow configuration that improves thermal management and heat transfer of one or more fluids in the plate. The water channels may include water distribution channels or water main flow field channels. The water main flow field channels may include the humps. The hydrogen channels may include hydrogen distribution channels or hydrogen main flow field channels. The hydrogen main flow field channels may include the cavities. Water may flow over the humps and hydrogen may flow within the cavities.

The present disclosure is also directed to an electrochemical cell bipolar plate for stack assembly including a single sheet of formable material, a plurality of water distribution channels and water main flow field channels, and a plurality of hydrogen distribution channels and hydrogen main flow field channels.

The single sheet of formable material includes an anode side and a cathode side opposite the anode side. The anode side and the cathode side have a complementary or offset structural configuration. The formable material may be electrically conductive.

The plurality of water distribution channels and water main flow field channels are on the anode side, while the plurality of hydrogen distribution channels and hydrogen main flow field channels are on the cathode side. The water distribution channels and water main flow field channels have a cross-flow configuration with the hydrogen distribution channels and hydrogen main flow field channels.

The cross-flow configuration may include an angle. The angle may range from about 0 degrees to about 180 degrees. The angle of the cross-flow configuration may be about 90 degrees.

The water distribution channels and the hydrogen distribution channels include a plurality of lands. Each of the lands include a groove, a flange, and a seal positioned within the flange to provide a variable groove depth. Two or more of the plurality of lands may form the water distribution channels and the hydrogen distribution channels. The seal may include an inner seal or an outer seal.

The water main flow fields include a plurality of humps and the hydrogen main flow fields include a plurality of cavities to improve thermal management and heat transfer of one or more fluids in the plate. The one or more fluids may include water, hydrogen, oxygen, nitrogen, carbon dioxide, coolant, or electrolyte. The humps may include any formable feature that can affect the flow direction of the one or more fluids.

The present disclosure is also directed to a cell stack assembly including a first single sheet of formable material, an electrolyte membrane, and a second single sheet of formable material. The first single sheet of formable material includes a first anode side and a first cathode side opposite the first anode side. The second single sheet of formable material includes a second anode side and a second cathode side opposite the second anode side. The cell stack assembly may include comprising electrolyzer cells or fuel cells. The formable material may be an electrically conductive material. The electrically conductive material may be metal. The assembly may further include one or more inner seals or outer seals.

The first single sheet and the second single sheet have a complementary or offset structural configuration including a plurality of water channels and a plurality of hydrogen channels. The water channels and the hydrogen channels have a cross-flow configuration and improve thermal management and heat transfer of one or more fluids in the stack. The one or more fluids may include a liquid or a gas. The one or more fluids may include water, hydrogen, or oxygen, nitrogen, carbon dioxide, coolant, or electrolyte. The complementary or offset configuration of the first sheet and the second sheet may prevent or reduce collapse of the stack

The plurality of water channels include a plurality of humps on the first anode side and the second anode side. The plurality of water channels alternate on the first anode side and the second anode side such that the water channels of the first single sheet and the second single sheet do not align. Water may flow over the humps. The humps may include any formable feature that can affect the flow direction of the one or more fluids.

The plurality of hydrogen channels include a plurality of cavities on the first cathode side and the second cathode side. The plurality of hydrogen channels alternate on the first anode side and the second anode side such that the hydrogen channels of the first single sheet and the second single sheet do not align. Hydrogen may flow within the cavities.

Finally, the present disclosure is also directed to a method of making a single sheet bipolar plate including a first step of forming a single sheet of formable material in a single forming or a multi-forming process to create a formed structure. The formed structure includes an anode side and a cathode side each including a plurality of fluid distribution channels and main flow field channels. Each of the fluid distribution channels includes a groove, a flange, and a land. Each of the main flow field channels includes a plurality of humps and cavities. The forming step may be performed by hydroforming, stamping, natural forming, printing, or progressive forming.

The method further includes the second step of sealing the distribution channels or the main flow field channels to create a closed system. The sealing step may be performed by applying a seal to the flange, the groove, or the land of the distribution channels. The seal may be applied to the flange. The seal may be an inner seal. The sealing step may be performed by applying a seal to an outer sealing area of the plate. The seal may be an outer seal. The sealing step may be performed by parallel groove forming. The sealing step may include sealing the anode side. The sealing step may including sealing the cathode side. The sealing step may include a water seal or a hydrogen seal.

### BRIEF DESCRIPTION OF THE DRAWINGS

These and other features, aspects, and advantages of the present invention will become better understood when the following detailed description is read with reference to the accompanying drawings, in which like characters represent like parts throughout the drawings, wherein:
FIG. 1A is perspective view of an electrolyzer cell stack according to the present disclosure;
FIG. 1B is a schematic view of an electrolysis system configured to utilize the electrolyzer cells stack of FIG. 1A;
FIG. 1C is a schematic view of an additional portion of the electrolysis system of FIG. 1B;
FIG. 2A is a plan view of a top side of an embodiment of a single sheet bipolar plate for stack assembly having water in and out ports, as well as hydrogen out ports;
FIG. 2B is a plan view of the bottom side of the single sheet bipolar plate for stack assembly of FIG. 2A;
FIG. 3A is a detailed plan view of the top side of the single sheet bipolar plate for stack assembly showing an inlet port and flow distribution channels;
FIG. 3B is a detailed plan view of the bottom side of the single sheet bipolar plate for stack assembly of FIG. 3A;
FIG. 3C is a detailed perspective view of the flow distribution channels of FIG. 3A showing a variable groove depth plate and a flange with an inner seal to separate the top side from the bottom side of the single sheet bipolar plate for stack assembly;
FIG. 3D is a detailed plan view of a cross-flow configuration of the back side of a plate having the anode side main flow fields where water is flowing from top-to-bottom and the cathode side main flow fields where hydrogen is flowing from right-to-left;
FIG. 4A is a plan view of a top (water) side of another embodiment of the single sheet bipolar plate for stack assembly;
FIG. 4B is a detailed plan view of the top (water) side of the plate of FIG. 4A showing distribution channels and main flow field channels for water;
FIG. 4C is a detailed plan view of the single sheet bipolar plate for stack assembly of FIG. 4A showing a hydrogen sealing groove without a seal on the water side of the plate;
FIG. 5A is a plan view of the top (water) side of the single sheet bipolar plate for stack assembly of FIG. 4A having a seal;
FIG. 5B is a detailed plan view of the plate of FIGS. 5A and 4C showing the hydrogen sealing groove with the seal on the water side of the plate;
FIG. 6A is a plan view of the bottom (hydrogen) side of the plate of FIG. 3A;
FIG. 6B is a detailed plan view of the bottom (hydrogen) side of the plate of FIG. 6A showing distribution channels and main flow field channels for hydrogen;
FIG. 6C is a detailed plan view of the bottom (hydrogen) side of the plate of FIG. 6A showing a water sealing groove without a seal on the hydrogen side of the plate;
FIG. 7A is a plan view of the bottom (hydrogen) side of the single sheet bipolar plate for stack assembly of FIG. 4A having a seal;
FIG. 7B is a detailed plan view of the bottom (hydrogen) side of the plate of FIGS. 7A and 6C showing the water sealing groove with the seal on the hydrogen side of the plate
FIG. 8A is a plan view of another embodiment of the single sheet bipolar plate for stack assembly showing a flow distribution area, including a cross-sectional length area along line A-A, a cross-sectional width area along line B-B, and a flow feature F;
FIG. 8B is a detailed cross-sectional view of the flow feature F in the flow and distribution area of the plate of FIG. 8A ;
FIG. 8C is a cross-sectional view of flow feature E along line B-B of FIG. 8A;
FIG. 8D is a detailed cross-sectional view of flow feature E along line B-B in the flow and distribution area of the plate of FIG. 8C;
FIG. 8E is cross-sectional view of the seal feature C and flow feature D along line A-A of FIG. 8A;
FIG. 8F is a detailed cross-sectional view of the seal feature C along line A-A in a sealing area of the plate of FIG. 8E;
FIG. 8G is detailed cross-sectional view of the flow feature D along line A-A in a flange area of the plate of FIG. 8E;
FIG. 9A is a plan view of a Type A plate (Plate A) showing humps arranged in the main flow field channels on a top side of Plate A;
FIG. 9B is a detailed perspective view of the top side of Plate A of FIG. 8A showing the humps;
FIG. 9C is a detailed perspective view of the bottom side of Plate A of FIG. 9A showing cavities formed by the humps on the top side of Plate A;
FIG. 9D is a plan view of a single sheet bipolar plate for stack assembly showing a top side having alternative main flow field channels created by lands having an oval shape;
FIG. 9E is a detailed plan view of the plate of FIG. 8D showing a crisscross pattern of main flow field channels created by lands having an oval shape;
FIG. 9F is a plan view of a single sheet bipolar plate for stack assembly showing a top side having alternative main flow field channels created by lands having a rectangular shape;
FIG. 9G is a detailed plan view of the plate of FIG. 8G showing a crisscross pattern of main flow field channels created by lands having a rectangular shape;
FIG. 10A is a plan view of a top side of another embodiment of the single sheet bipolar plate for stack assembly showing water main flow field channels;
FIG. 10B is a detailed plan view of the top side of the plate of FIG. 10A water flow through main flow field channels and over the humps formed therein;
FIG. 10C is a detailed perspective view of the top side of the plate of FIG. 10A showing the humps formed in the main flow field channels;
FIG. 10D is a cross-sectional view of the single sheet bipolar plate for stack assembly of FIG. 10A showing the humps arranged on the top side of the plate forming cavities on the bottom side;
FIG. 11A is a detailed plan view of the bottom side of the plate of FIG. 10A showing hydrogen flow distribution channels;
FIG. 11B is a detailed plan view of the bottom side of the plate of FIG. 11A showing hydrogen flow through cavities formed in main flow field channels on the underside by the humps on the top side;
FIG. 11C is a detailed perspective view of the bottom side of the plate of FIG. 11A showing the cavities formed in the main flow field channels by the humps;
FIG. 12A is a cross-sectional view of another stack embodiment assembled to have three single sheet bipolar plates having two different forming configurations and formed structures (e.g., Type A and B), including two Type A plates, and a single Type B plate layered between the two Type A plates, with each plate including humps in main flow fields to allow flow, and a soft membrane layer between each of the plates;
FIG. 12B is a cross-sectional view of a cell stack having three single sheet bipolar plates having different forming configurations and main flow field channels comprising any formable feature that facilitates the flow of media;
FIG. 12C is a cross-sectional view of a cell stack having three single sheet bipolar plates having different forming configurations and the same main flow field channel design configuration (oval lands) of FIGS. 8D and 8E;
FIG. 12D is a cross-sectional view of a cell stack having three single sheet bipolar plates having different forming configurations and the same main flow field channel design configuration (rectangular lands) of FIGS. 8F and 8G;
FIG. 13A is a plan view of a first design configuration of Plate A of the single sheet bipolar plate for stack assembly showing a top side with a seal configured to receive and distribute water;
FIG. 13B is a plan view of a bottom side of Plate A of FIG. 13A showing a bottom side with a seal configured to receive and distribute hydrogen;
FIG. 13C is a plan view of a second design configuration, Plate B, of the single sheet bipolar plate for stack assembly showing a bottom side with a seal configured to receive and distribute hydrogen;
FIG. 13D is a plan view of a top side of Plate B of FIG. 13C showing a top side with a seal configured to receive and distribute water;
FIG. 14A is a cross-sectional view of a cell stack having Plate A of FIGS. 13A and 13B stacked with Plate B of FIGS. 13C and 13D, and showing seal-to-seal alignment and seal-to-plate compression between Plates A and B;
FIG. 14B is another cross-sectional view of the cell stack having Plate A of FIGS. 13A and 13B stacked with Plate B of FIGS. 13C and 13D, and seal-to-seal alignment and seal-to-plate compression contact between Plates A and B;
FIG. 15 is a plan view of the top side of the single sheet bipolar plate shown in FIG. 3A-3B for stack assembly having a land to groove ratio;
FIG. 16A is a plan view of a top side of another embodiment of a single sheet bipolar plate for stack assembly having water in and out ports, as well as hydrogen out ports;
FIG. 16B is a plan view of the bottom side of the single sheet bipolar plate for stack assembly of FIG. 16A;
FIG. 17A is a plan view of a top (water) side of another embodiment of the single sheet bipolar plate for stack assembly;
FIG. 17B is a detailed plan view of the top (water) side of the plate of FIG. 17A showing distribution channels and main flow field channels for water;
FIG. 17C is a detailed plan view of the single sheet bipolar plate for stack assembly of FIG. 17A showing a hydrogen sealing groove without a seal on the water side of the plate;
FIG. 18A is a plan view of the top (water) side of the single sheet bipolar plate for stack assembly of FIG. 17A having a seal;
FIG. 18B is a detailed plan view of the plate of FIGS. 18A and 17C showing the hydrogen sealing groove with the seal on the water side of the plate;
FIG. 19A is a plan view of the bottom (hydrogen) side of the plate of FIG. 17A;
FIG. 19B is a detailed plan view of the bottom (hydrogen) side of the plate of FIG. 19A showing distribution channels and main flow field channels for hydrogen;
FIG. 19C is a detailed plan view of the bottom (hydrogen) side of the plate of FIG. 19A showing a water sealing groove without a seal on the hydrogen side of the plate;
FIG. 20A is a plan view of the bottom (hydrogen) side of the single sheet bipolar plate for stack assembly of FIG. 17A having a seal;
FIG. 20B is a detailed plan view of the bottom (hydrogen) side of the plate of FIGS. 20A and 19C showing the water sealing groove with the seal on the hydrogen side of the plate;
FIG. 21A is a plan view of another embodiment of the single sheet bipolar plate for stack assembly showing a flow distribution area, including a cross-sectional length area along line A-A, a cross-sectional width area along line B-B, and a flow feature A;
FIG. 21B is a detailed cross-sectional view of the flow feature A in the flow and distribution area of the plate of FIG. 21A ;
FIG. 22A is a detailed plan view of the bottom side of another embodiment of the single sheet bipolar plate for stack assembly showing hydrogen flow distribution channels;
FIG. 22B is a detailed plan view of the bottom side of the plate of FIG. 22A showing hydrogen flow through cavities formed in main flow field channels on the underside by the humps on the top side;
FIG. 22C is a detailed perspective view of the bottom side of the plate of FIG. 22A showing the cavities formed in the main flow field channels by the humps;
FIG. 23A is a plan view of a third design configuration of Plate A of the single sheet bipolar plate for stack assembly showing a top side with a seal configured to receive and distribute water;
FIG. 23B is a plan view of a bottom side of Plate A of FIG. 23A showing a bottom side with a seal configured to receive and distribute hydrogen;
FIG. 23C is a plan view of a fourth design configuration, Plate B, of the single sheet bipolar plate for stack assembly showing a bottom side with a seal configured to receive and distribute hydrogen;
FIG. 23D is a plan view of a top side of Plate B of FIG. 23C showing a top side with a seal configured to receive and distribute water;
FIG. 24 is a plan view of the top side of the single sheet bipolar plate shown in FIG. 16A-16B for stack assembly having a land to groove ratio;
FIG. 25A is a plan view of a plate having additional forming features and alignment pins;
FIG. 25B is a detailed plan view of the plate shown in FIG. 25A having additional forming features and alignment pins;
FIG. 26A illustrates the formation of the plate from a metal sheet when using a tool and a die;
FIG. 26B illustrates the stress results during the formation of the plate from a metal sheet when using a tool and a die;
FIG. 26C shows a computer simulation illustrating the formation of the plate from a metal sheet when using a tool and a die;
FIG. 26D shows a computer simulation illustrating the stress results during the formation of the plate from a metal sheet when using a tool and a die;
FIG. 26E is a scaled down model of the plate with key forming features used for manufacturing;
FIG. 26F illustrates stress results of the scaled down model of the plate of FIG. 26E; and
FIG. 27 is a cross-sectional view of a flow field and distribution area section of a plate identifying various design parameters of the plate.

These and other features, aspects, and advantages of the present invention will become better understood when the following detailed description is read with reference to the accompanying drawings described herein. Reference is also made to the accompanying drawings that form a part hereof and in which is shown by way of illustration specific embodiments in which the invention may be practiced.

### DETAILED DESCRIPTION

The present disclosure is directed to an electrochemical cell bipolar assembly plate 100 and/or 101 for use in any electrochemical reaction, particularly any electrolytic reaction utilizing a charge (+ or -) of electricity to generate a new product (e.g., hydrogen). For example, an electrochemical cell utilizing the present bipolar plate may be a fuel cell or an electrolyzer cell 80.

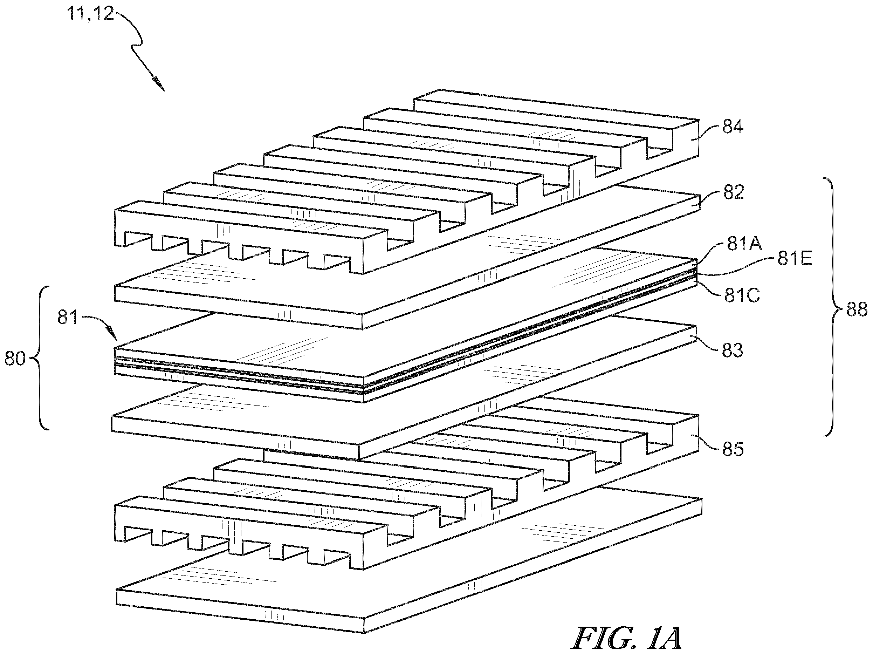

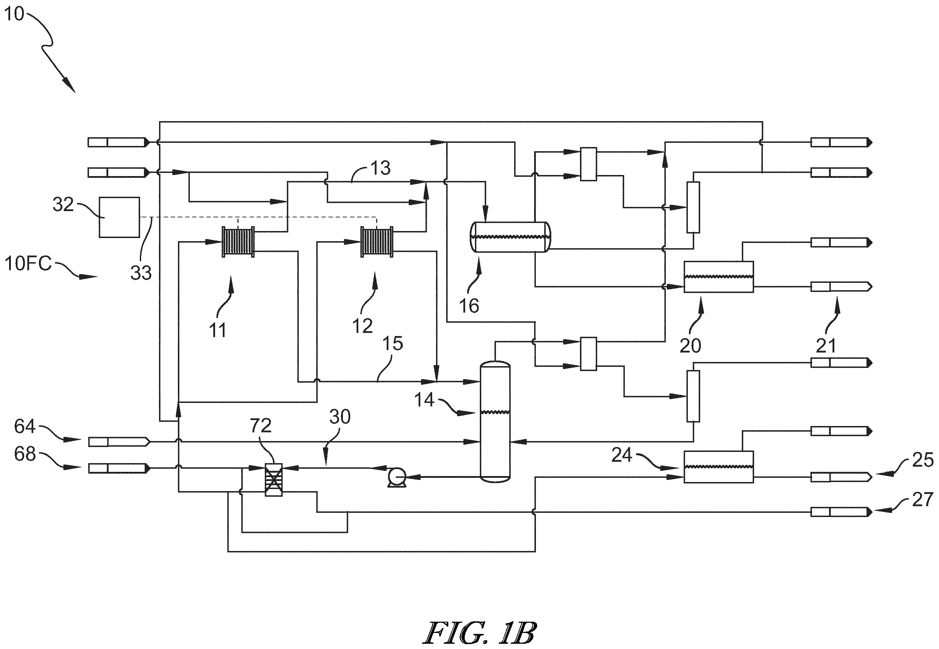

As shown in FIGS. 1A and 1B, electrolysis systems 10 are typically configured to utilize water and electricity to produce hydrogen and oxygen. Electrolysis systems 10 typically include one or more electrolyzer cells 80 that utilize electricity to chemically produce substantially pure hydrogen 13 and oxygen 15 from water 30 (e.g., deionized water). Often the electrical source for the electrolysis systems 10 is produced from power or energy generation systems, including renewable energy systems such as wind, solar, hydroelectric, and geothermal sources for the production of green hydrogen. In turn, the pure hydrogen produced by the electrolysis systems 10 is often utilized as a fuel or energy source for those same power generation systems, such as fuel cell systems. Alternatively, the pure hydrogen produced by the electrolysis systems 10 may be stored for later use.

The typical electrolyzer cell 80 or electrolytic cell 80, is comprised of multiple assemblies compressed and bound into a single assembly. Multiple electrolyzer cells 80 may be stacked relative to each other, along with bipolar plates (BPP) 84, 85 there between, to form an electrolyzer cell stack (for example, electrolyzer cell stacks 11, 12 in FIG. 1B). Each electrolyzer cell stack 11, 12 may house a plurality of electrolyzer cells 80 connected together in series and/or in parallel. The number of electrolyzer cell stack 11, 12 in the electrolysis systems 10 can vary depending on the amount of power required to meet the power need of any load (e.g., fuel cell stack). The number of electrolyzer cells 80 in an electrolyzer cell stack 11, 12 can vary depending on the amount of power required to operate the electrolysis systems 10 including the electrolyzer cell stack 11, 12.

An electrolyzer cell 80 includes a multi-component membrane electrode assembly (MEA) 81 that has an electrolyte 81E, an anode 81A, and a cathode 81C. Typically, the anode 81A, cathode 81C, and electrolyte 81E of the membrane electrode assembly (MEA) 81 are configured in a multi-layer arrangement that enables the electrochemical reaction to produce hydrogen and/or oxygen via contact of the water with one or more gas diffusion layers 82, 83. The gas diffusion layers (GDL) 82, 83, which may also be referred to as porous transport layers (PTL), are typically located on one or both sides of the MEA 81. Bipolar plates (BPP) 84, 85 often reside on either side of the GDLs and separate the individual electrolyzer cells 80 of the electrolyzer cell stack 11, 12 from one another. One bipolar plate 85 and the adjacent gas diffusion layers 82, 83 and MEA 81 can form a repeating unit 88.

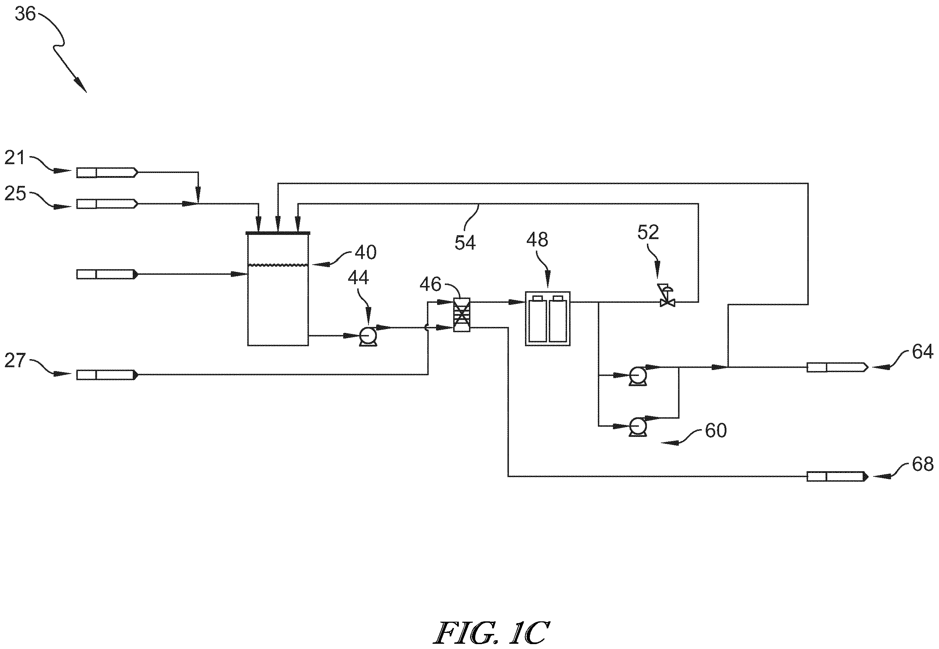

As shown in FIGS. 1B and 1C, an exemplary electrolysis system 10 can include two electrolyzer cell stacks 11, 12 and a fluidic circuit 10FC including various fluidic pathways 13 shown in FIGS. 1B and 1C. The fluidic pathways 13 are configured to circulate, inject, and/or purge fluid and other components to and from the electrolysis systems 10. A person skilled in the art would understand that one or a variety of a number of components within the fluidic circuit 10FC, as well as more or less than two electrolyzer cell stacks 11, 12, may be utilized in the electrolysis systems 10. For example, the electrolysis systems 10 may include one electrolyzer cell stack 11, and in other examples, the electrolysis systems 10 may include three or more electrolyzer cell stacks.

The electrolysis systems 10 may include one or more types of electrolyzer cell stacks 11, 12 therein. In the illustrated embodiment, a polymer electrolyte membrane (PEM) electrolyzer cell 80 may be utilized in the stacks 11, 12. A PEM electrolyzer cell 80 typically operates at about 4°C to about 150°C, including any specific or range of temperatures comprised therein. A PEM electrolyzer cell 80 also typically functions at about 100 bar or less of pressure, but can go up to about 1000 bar, including any specific or range of pressures comprised therein. This pressure range reduces the total energy demand of the system.

A standard electrochemical reaction that occurs in a PEM electrolyzer cell 80 to produce hydrogen is as follows.
- Anode: 2H₂O → O₂ + 4H⁺ + 4e⁻
- Cathode: 4H⁺ + 4e⁻ → 2H₂
- Overall: 2H₂O (liquid) → 2H₂ + O₂

Additionally, a solid oxide electrolyzer cell 80 may be utilized in the electrolysis system 10. A solid oxide electrolyzer cell 80 will function at a temperature of about 500°C to about 1000°C, including any specific or range of temperatures comprised therein. A standard electrochemical reaction that occurs in a solid oxide electrolyzer cell 80 to produce hydrogen is as follows.
- Anode: 2O²⁻ → O₂ + 4e⁻
- Cathode: 2H₂O → 4e⁻+ 2H₂ + 2O²⁻
- Overall: 2H₂O (liquid) → 2H₂ + O₂

Moreover, an AEM electrolyzer cell 80 may be utilized, which uses an alkaline media. An exemplary AEM electrolyzer cell 80 is an alkaline electrolyzer cell 80. Alkaline electrolyzer cells 80 comprise aqueous solutions, such as potassium hydroxide (KOH) and/or sodium hydroxide (NaOH), as the electrolyte.

Alkaline electrolyzer cells 80 typically perform at operating temperatures ranging from about 0°C to about 150°C, including any specific or range of temperatures comprised therein. Alkaline electrolyzer cell 80 generally operate at pressures ranging from about 1 bar to about 100 bar, including any specific or range of pressures comprised therein. A typical hydrogen-generating electrochemical reaction that occurs in an alkaline electrolyzer cell 80 is as follows.
- Anode: 4OH⁻ → O₂ + 2H₂O + 4e⁻
- Cathode: 4H₂O + 4e⁻ → 2H₂ + 4OH⁻
- Overall: 2 H₂O 2H₂ + O₂

As shown in FIG. 1B, the electrolyzer cell stacks 11, 12 include one or more electrolyzer cells 80 that utilize electricity to chemically produce substantially pure hydrogen and oxygen from water. In turn, the pure hydrogen produced by the electrolyzer may be utilized as a fuel or energy source. As shown in FIG. 1B, the electrolyzer cell stack 11, 12 outputs the produced hydrogen along a fluidic connecting line 13 to a hydrogen separator 16. The electrolyzer cell stack 11, 12 also outputs the produced oxygen along a fluidic connecting line 15 to an oxygen separator 14.

The hydrogen separator 16 may be configured to output pure hydrogen gas and also send additional output fluid to a hydrogen drain tank 20, which then outputs fluid 124, 138 to a deionized water drain 21. The oxygen separator 14 may output fluid to an oxygen drain tank 24, which in turn outputs fluid to a deionized water drain 25. A person skilled in the art would understand that certain inputs and outputs of fluid may be pure water or other fluids, such as coolant or byproducts of the chemical reactions of the electrolyzer cell stacks 11, 12. For example, oxygen and hydrogen may flow away from the cell stacks 11, 12 to the respective separators 14, 16. The system 10 may further include a rectifier 32 configured to convert electricity 33 flowing to the cell stacks 11, 12 from alternating current (AC) to direct current (DC).

The deionized water drains 21, 25 each output to a deionized water tank 40, which is part of a polishing loop 36 of the fluidic circuit 10FC, as shown in FIG. 1C. Water with an ion content can damage electrolyzer cell stacks 11, 12 when the ionized water interacts with internal components of the electrolyzer cell stacks 11, 12. The polishing loop 36, shown in greater detail in FIG. 1C, is configured to deionize the water such that it may be utilized in the cell stacks 11, 12 and not damage the cell stacks 11, 12.

In the illustrated embodiment, the deionized water tank 40 outputs fluid, in particular water, to a deionized water polishing pump 144. The deionized water polishing pump 144 in turn outputs the water to a water polishing heat exchanger 46 for polishing and treatment. The water then flows to a deionized water resin tank 48.

Coolant is directed through the electrolysis systems 10, in particular through a deionized water heat exchanger 72 that is fluidically connected to the oxygen separator 14. The coolant used to cool said water may also be subsequently fed to the water polishing heat exchanger 46 via a coolant input 27 for polishing. The coolant is then output back to the deionized water heat exchanger 72 for cooling the water therein.

After the water is output from the deionized water polishing heat exchanger 46 and subsequently to the deionized water resin tank 48, a portion of the water may be fed to deionized water high pressure feed pumps 60. Another portion of the water may be fed to a deionized water pressure control valve 52, as shown in FIG. 1C. The portion of the water that is fed to the deionized water pressure control valve 52 flows through a recirculation fluidic connection 54 that allows the water to flow back to the deionized water tank 40 for continued polishing.

In some embodiments, the electrolysis system 10 may increase deionized water skid for polishing water flow to flush out ions within the water at a faster rate. The portion of the water that is fed to the deionized water high pressure feed pumps 60 is then output to a deionized water feed 64, which then flows into the oxygen separator 14 for recirculation and eventual reusage in the electrolyzer cell stacks 11, 12. This process may then continuously repeat.

The electrolysis systems 10 described herein, may be used in stationary and/or immovable power system, such as industrial applications and power generation plants. The electrolysis systems 10 may also be implemented in conjunction with other electrolysis systems 10.

The present electrolysis system 10 may be comprised in a stationary or mobile application. The electrolysis system 10 may be comprised by or in a vehicle or a powertrain 100. A vehicle or powertrain 100 comprising the electrolysis systems 10 may be an automobile, a pass car, a bus, a truck, a train, a locomotive, an aircraft, a light duty vehicle, a medium duty vehicle, and/or a heavy duty vehicle. In addition, it may be appreciated by a person of ordinary skill in the art that the electrolysis system 10, electrolyzer stack 11, 12, and/or the electrolyzer cell 80 described in the present disclosure may be substituted for any electrochemical system, such as a fuel cell system, a fuel cell stack, and/or a fuel cell (FC), respectively. As such, in some embodiments, the features and aspects described and taught in the present disclosure regarding electrolysis system 10, electrolyzer stack 11, 12, and/or the electrolyzer cell 80 also relate to a fuel cell system, a fuel cell stack, and/or a fuel cell (FC), respectively. In further embodiments, the features and aspects described or taught in the present disclosure do not relate, and are therefore distinguishable from, those of a fuel cell system, a fuel cell stack, and/or a fuel cell (FC).

In an exemplary embodiment, the electrochemical cell is an electrolyzer cell 80. Bipolar plates (BPP) 84, 85 of the electrolyzer cell 80 may comprise a single sheet bipolar plate 100 and/or 101. The electrolyzer cell 80 may include the single sheet bipolar plate 100 and/or 101 for stack 11, 12 assembly. Further, the single sheet bipolar plate 100 and/or 101 for stack assembly may be used in an electrolyzer cell 80 (also referred to as an electrolytic cell or an electrolysis cell), the electrolyzer stack 11, 12, and/or the electrolysis system 10 (also referred to as an electrolyzer system).

The present single sheet bipolar plate 100 and/or 101 for stack 11, 12 assembly may be operationally and functionally incorporated into an electrolyzer cell 80 or a fuel cell system. Fuel cells typically require at least three chambers or flow fields to house gaseous anode (hydrogen) and cathode (oxygen) reactants separately from a liquid coolant. Since electrolyzers may not require coolant or may incorporate coolant into their anode and/or cathode reactant flow fields when necessary, there is no absolute need for a separate coolant flow field for an electrolysis system 10, electrolyzer stack 11, 12, and/or the electrolyzer cell 80 as is operationally required for most standard fuel cell systems in the current market.

Accordingly, while the present single sheet bipolar plate 100 and/or 101 for electrolyzer stack 11, 12 assembly is ideal for electrolyzer systems 10, stacks 11, 12, and cells 80 that typically only require two flow fields for anode and cathode reactant flow, it could be used for other types of electrochemical systems (e.g., fuel cell systems) and/or electrolytic systems that also only require two separate flow fields. For example, air-cooled fuel cell systems that do not comprise or require a separate flow field for liquid coolant, because the system is cooled by air, could also utilize the present single sheet bipolar plate 100 and/or 101 for stack 11, 12 assembly.

The present single sheet bipolar plate 100 and/or 101 for stack 11, 12 assembly provides the requisite separation of anode and cathode reactant flow fields to catalyze the above-noted hydrogen-generating chemical reactions via a single sheet of formable material 102. A single sheet of formable material 102 of the present disclosure refers to only one (1), about one (1), and/or no more than one (1) sole or a single sheet of material being utilized to produce the final bipolar electrolysis assembly plate used for electrolyzer operation. Any single sheet of formable material 102 may be composed of multiple layers that are previously and/or mechanically, electrochemically, chemically, automatedly, automatically, and/or manually adjoined to provide a single sheet of formable material for further manipulation as described herein.

Manually or mechanically, through one (e.g., single forming) or more forming (e.g., multiple forming) processes, the single sheet of formable material 102 will then be simultaneously, collectively, and/or uniformly formed into the presently described bipolar electrolysis assembly plate 100 and/or 101. In an illustrative embodiment, only a single forming process is utilized to form the present plate 100 and/or 101. In further embodiments, more than one, a couple, a few, multiple, and/or a plurality (e.g., three or more) forming processes may be required to form the present plate 100 and/or 101. In addition, multiple stages of one or more different types of forming processes or multiple different methods may be required to create a formed structure of the plate 100 and/or 101. Once the single sheet bipolar plate for stack assembly is formed, it may encapsulate the anode 114, cathode 116, and/or electrolyte 118 components.

A formable material 102 of the present single sheet bipolar plate 100 and/or 101 for stack 11, 12 assembly may be any material known in the mechanical arts used to form a heat-resistant, damage-resistant, and/or collapse-resistant structure. The formable material 102 may be any electrically conductive material, such as metals, plastics, composites, cladded materials, hybrid materials, alloys, and/or coated materials. In some embodiments, the formable material 102 is non-metallic, while in exemplary embodiments, the formable materials is metallic.

For example, a formable material 102 of the single sheet bipolar plate 100 and/or 101 for stack 11, 12 assembly may be a metal. While any precious, semi-precious, or non-precious metal may be utilized, an exemplary metal of the single sheet bipolar plate 100 and/or 101 for stack 11, 12 assembly includes titanium, nickel, aluminum, steel, and/or combinations thereof. An exemplary steel formable material 102 is a stainless steel.

The formable material 102 is a single sheet of material having no or minimal structural features or flaws prior to forming. The structure-free formable material 102 may then be configured and/or formed to produce the single sheet bipolar plate 100 and/or 101 for stack 11, 12 assembly having structural features required for reactant flow and electrolyzer performance. For example, the single sheet of formable material 102 will be configured to have structural features on multiple sides. Specifically, the single sheet bipolar plate for stack assembly will be formed to have structural features on two sides.

Notably, a first or top side 104 of the single sheet bipolar plate 100 and/or 101 for stack 11, 12 assembly will have a same, substantially similar, complementary, inverse, and/or mirror image on the opposite side of the plate (e.g., the second or bottom side of the plate 106). Similarly, a second or bottom side 106 of the single sheet bipolar plate 100 and/or 101 for stack 11, 12 assembly will also have a same, substantially similar, complementary, inverse, and/or mirror image on the opposite side of the sheet (e.g., the first or top side 104 of the plate 100 and/or 101). Formation of the same, substantially similar, complementary, inverse, and/or mirror image structural features located on the first/top side 104 and second/bottom side 106 on a single plate 100 and/or 101 or sheet 102 by one or more forming processes negates the need for multiple different layers of components as is currently required within traditional electrochemical cell formation and/or manufacturing.

In some embodiments, either of the first/top side 104 or the second/bottom side 106 of the single sheet bipolar plate 100 and/or 101 for stack 11, 12 assembly may comprise an anode (water) 114 or a cathode (hydrogen) 116 of the electrolyzer cell. Importantly, the anode 114 and the cathode 116 must be comprised on opposite sides of the single sheet bipolar plate 100 and/or 101 for stack 11, 12 assembly. In a preferred embodiment, the first/top side 104 comprises the anode (water) 114, while the second/bottom side 106 of the single sheet bipolar plate 100 and/or 101 for stack 11, 12 assembly may comprise the cathode (hydrogen) 116 of the electrolyzer cell.

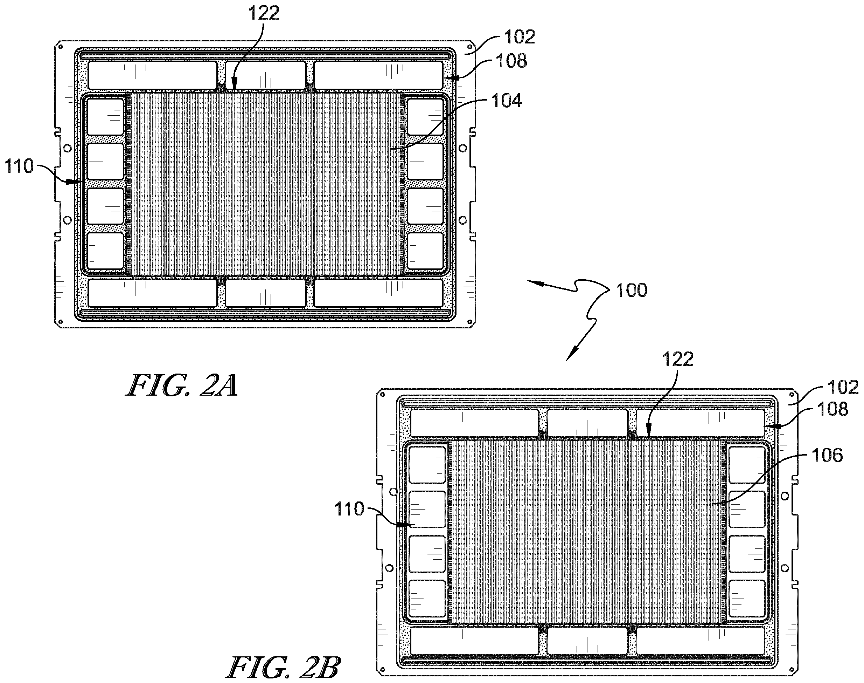

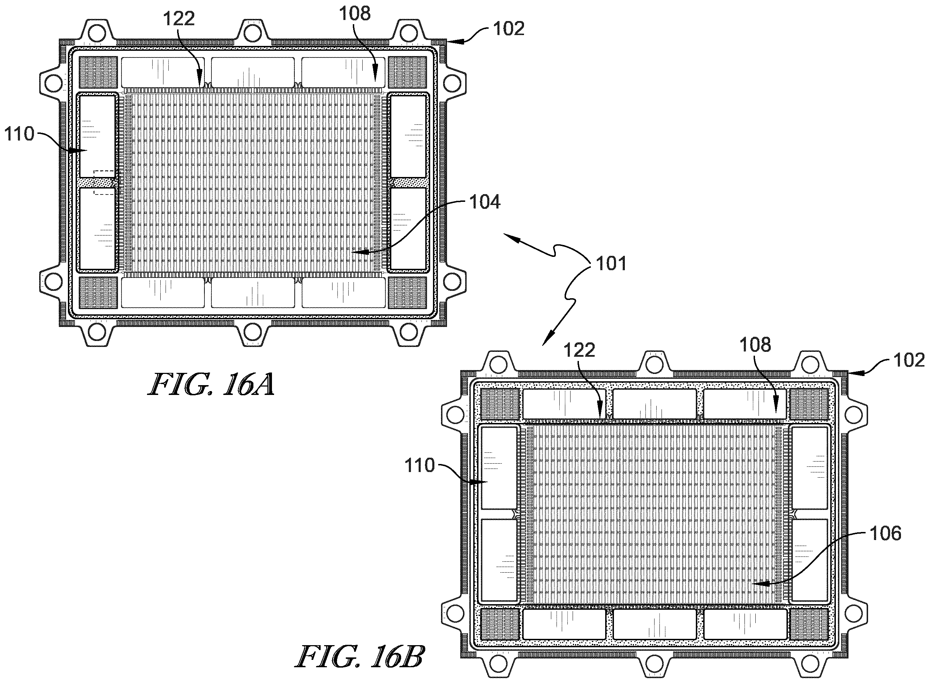

FIG. 2A shows a first, top side 104 of one embodiment of the single sheet bipolar plate 100 for stack 11, 12 assembly. FIG. 2B shows a second, bottom side 106 of the same single sheet bipolar plate 100 for stack 11, 12 assembly. FIG. 16A shows a first, top side 104 of a different embodiment of the single sheet bipolar plate 101 for stack 11, 12 assembly. FIG. 16B shows a second, bottom side 106 of the same single sheet bipolar plate 101 for stack 11, 12 assembly. The top and bottom sides 104, 106 of the plate 100 and/or 101 have one or more water inlets and outlets 108 or water in/out ports 108 for water to enter and exit the plate as necessary for hydrogen (H₂) generation.

The top and bottom sides 104, 106 of the plate 100 and/or 101 also include one or more hydrogen outlets or out ports 110 for hydrogen (H₂) to exit the plate 100 and/or 101 after production within the plate 100 and/or 101. The plate 100 embodiment of FIGS. 2A and 2B show a plurality (e.g., about 6) of water inlets/outlets and a plurality (e.g., about 8) of hydrogen out ports. The plate 101 embodiment of FIGS. 16A and 16B show a plurality (e.g., about 6) of water inlets/outlets and a plurality (e.g., about 4) of hydrogen out ports. However, any number of water and/or hydrogen inlets and/or outlets 108, 110 may be comprised in either the top side 104 or the bottom side 106 of the present single sheet bipolar plate 100 and/or 101 for stack 11, 12 assembly to ensure proper performance of an electrolyzer cell 80, stack 11, 12, or system 10.

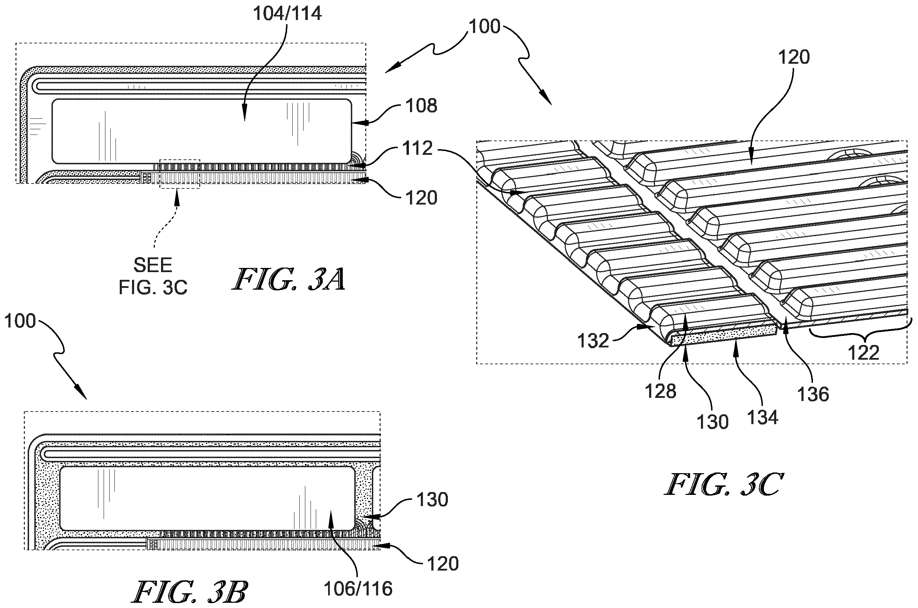

FIG. 3A shows a more detailed view of the top side 104 of the single sheet bipolar plate 100 and/or 101 for stack 11, 12 assembly. As shown in FIGS. 2A and 2B, the top side 104 of the plate 100 and/or 101 has the water inlet/outlet ports 108. Additionally, FIG. 3A shows one or more, a few, several, multiple, and/or a plurality (more than three) of flow and distribution channels 112 and main flow field channels 120 located on the top side 104 of the plate 100 and/or 101. Similarly, FIG. 3B shows a plurality (more than three) of sealing grooves 130 (e.g., grooves) located on the bottom side 106 of the plate 100 and/or 101.

While any number of flow and distribution channels 112 and main flow field channels 120 may be provided by the present plate 100 and/or 101, typically the flow and distribution channels and main flow field channels 120 located on either side 104, 106 of the plate 100 and/or 101 may range from about 5 to about 5000, including any specific number comprised therein. In some embodiments, the number of distribution channels may range from about 50 to about 500, from about 250 to about 3000, from about 1000 to about 2500, and about 2500 to about 5000, including any number comprised therein.

Referring to FIG. 3C, the distribution channels 112 and main flow field channels 120 are provided to enable the flow of a reactant and/or a fluid (e.g., liquid or gas) through the first/top/anode side 114 or the second/bottom/cathode side 116 of the plate 110. Exemplary liquid fluids 124 of the present plate 100 and/or 101 are water, electrolyte, coolant, and/or combinations thereof. Exemplary gaseous fluids 138 of the present plate 100 and/or 101 are hydrogen, oxygen, carbon dioxide, nitrogen, and/or combinations thereof.

The coolant may be liquid or gaseous. The electrolyte may be any liquid, solid, or gaseous solution having any concentration. Water 124 of the channels 112, 120 may also comprise one or more gases, such as oxygen (O₂). In particular, water 124 on the anode side 104 of the plate 100 and/or 101 may also comprise oxygen (O₂), both of which may be exhausted from the plate 100 and/or 101.

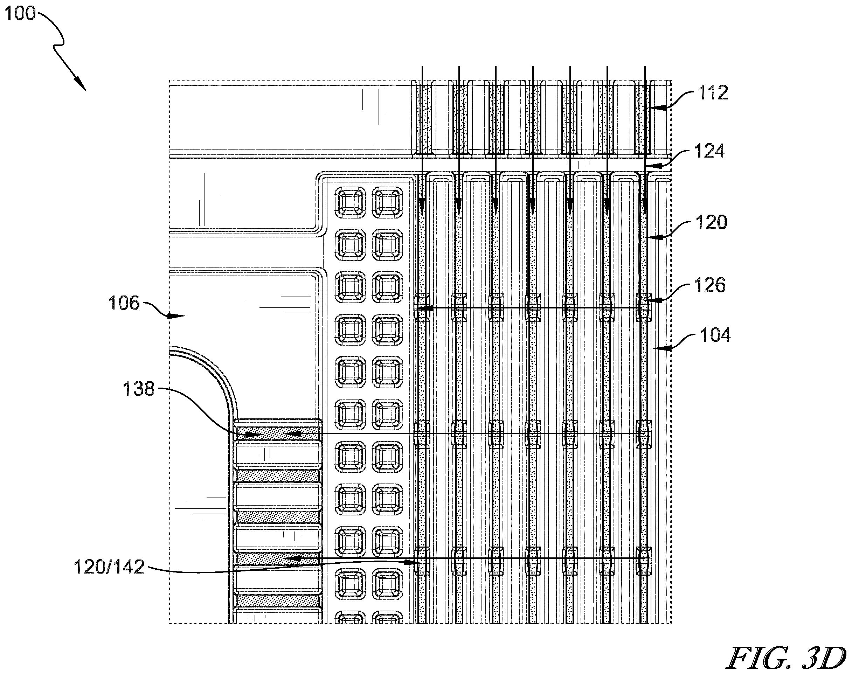

Importantly, the flow and distribution channels 112 and/or the main flow field channels 120 may be provided in the plate 100 and/or 101 in a cross-flow configuration 126 (see FIG. 3D). In an exemplary embodiment, the cross-flow configuration 126 of fluids 124, 138 is only provided in the main flow field channels 120 of the inner active region 122, and not the distribution channels 112. In other embodiments, the cross-flow configuration 126 of fluids 124, 138 is provided in the distribution channels 112 and the main flow field channels 120 of the plate 100 and/or 101.

This cross-flow configuration 126 of the flow channels 112, 120 provides a multidirectional or at least a bidirectional flow of fluids 124 on either side 104, 106 of the plate 100 and/or 101, such that the fluids 124, 138 do not flow in the same direction and do not make contact. For example, the flow of water 124 in the water flow distribution and/or main flow field channels 112, 120 on the top, anode side 104 of the plate 100 and/or 101 may flow in a vertical, such as from a top-to-bottom and a North-to-South direction or a bottom-to-top and a South-to-North direction. At the same time, the flow of hydrogen 138 in the hydrogen flow distribution channels on the bottom, cathode side 106 of the plate 100 and/or 101 may flow in a horizontal, such as from a left-to-right and an East-to-West direction or a right-to-left and a West-to-East direction.

Conversely, the flow of water 124 in the water flow distribution and/or main flow field channels 112, 120 on the top, anode side 104 of the plate 100 and/or 101 may flow in a horizontal, such as a left-to-right and a or East-to-West direction or a right-to-left and a West-to-East direction. At the same time, the flow of hydrogen 138 in the hydrogen flow distribution and/or main flow field channels 112, 120 on the bottom, cathode side 106 of the plate 100 and/or 101 may flow in a vertical, such as a top-to-bottom and a North-to-South direction or a bottom-to-top and a South-to-North direction.

In exemplary a cross-flow 126 configuration, the distribution and/or main flow field channels 112, 120 on opposite sides of the plate may flow fluids 124, 138 in a perpendicular (i.e., a 90° angle) orientation and/or direction. An exemplary cross-flow configuration 126 is shown in FIG. 3D, where the anode side 104 fluid, water 124, on the top side 104 of the plate 100 and/or 101 is flowing (vertical arrows) from a top-to-bottom direction or vice versa. At the same time, the cathode side 106 fluid, hydrogen 138, at the bottom side 106 of plate 100 and/or 101 is flowing (horizontal arrows) in a right-to-left direction.

In other cross-flow configurations 126, the fluid 124, 128 on either side 104, 106 of the plate 100 and/or 101 may flow 126 at any angle and/or direction that crosses. Specifically, the cross-flow configuration 126 of the fluids 124, 138 in their channels 112, 120 may have any angle ranging from about 0 degrees (0°) to about 180 degrees (180°), including any specific or range of angles comprised therein) For example, the flow of the fluids 124, 138 may be at any angle, such that that the flow of the fluid 124, 138 on one side of the plate 100 and/or 101 is not at the same angle and/or direction as the fluid 124, 138 flowing on the opposite side 104, 106 of the plate 100 and/or 101. In some additional embodiments, the fluids 124, 138 on opposite sides 104, 106 of the plate 100 and/or 101 may also flow in the same direction (e.g., parallel), such that they do not have a cross-flow configuration 126.

The flow and distribution channels 112 ("distribution channels") are separate from and different than the main flow field channels 120 of the plate 100 and/or 101. Specifically, the distribution channels 112 are located on the exterior periphery of the top and bottom side 104, 106 of the plate 100 and/or 101 to enable fluid 124, 138 to flow from the inlets 108 or other portions or areas of the plate 100 and/or 101 into the interior active portion 122 of the plate 100 and/or 101. The interior active portion 122 of the plate 100 and/or 101 comprises the plurality of main flow field channels 120 where hydrogen-generating electrochemical reactions take place.

Importantly, each of the plurality of distribution channels 112 and/or main flow field channels 120 are formed by being coupled between two lands 128. Each land 128 represents an area or portion of the plate 100 and/or 101 that was formed within its formed structure. The lands 128 protrude vertically above portions of the sides 104, 106 of the plate 100 and/or 101 that remain relatively or substantially unformed 136. Typically, at least two lands 128 are configured to adjoin in order to form a distribution channel 112 or a main flow field channel 120. Therefore, the low and alternating regions located between two lands 120 on each side 104, 106 of the plate 100 and/or 101 constitute one of the plurality of distribution channels 112 and/or one of the plurality of main flow field channels 120.

The land 128 of the distribution channels 112 comprises a groove 130 and a flange 132. The groove 130 is the top portion of the land 128 and is also provided within the formed structure of the single sheet bipolar plate 100 and/or 101 for stack 11, 12 assembly. The groove 130 also represents the maximum height to hold a maximum volume of fluid 124, 138 within the adjacent distribution channels 112, the adjacent main flow field channels 120, and/or on the opposite side 104, 106 of the plate 100 and/or 101.

The groove 130 height of the land 128 of the distribution channels 112 may be the same, substantially similar, and/or different from the groove 130 height of the land 128 of the main flow field channels 120. In an exemplary embodiment, the groove 130 height of the land 128 of the distribution channels 112 and the main flow field channels 120 are formed to be the same or substantially similar. In alternative embodiments, the groove 130 height of the land 128 of the distribution channels 112 and the main flow field channels 120 are different. For example, height of the land 128 and/or groove 130 of the distributions channels 112 may be greater than or less than the height of the land 128 and/or groove 130 of the main flow field channels 120.

The flange 132 is provided in the formed structure of the plate 100 and/or 101 in order to vary or extend a height of the land 128 or the grove 130, a depth of the distribution channels 112, and/or a depth of the main flow field channels 120. The flange 132 is the bottom portion of the land 128. The flange 132 is located in the area of the distribution channels 112 and/or the main flow fields 120 specifically to extend the height of the land 128 and the groove 130 as well as the depth of the channels 112, 120.

In one embodiment, the flange 132 is located at the base of the distribution channels 112, the land 128, and the groove 130 so as to provide the same extension of height or depth to those components. In a preferred embodiment, the flange 132 of the land 128 is the bottom portion of the land 128. More specifically, the flange 132 of the land 128 is located below the groove 128 portion of the land 128. The flange 132 is provided to effect and/or vary the amount and/or direction of fluid 124, 138 flowed in the adjacent distribution channels 112, the main flow field channels 120, and/or within the land 128.

In another embodiment, the flange 132 may have a different height that is provided at the base of the distribution channels 112 and the main flow field channels 120. Therefore, the height of the lands 128 and grooves 130 and the depth of the channels 112 in the distribution area 112 may be greater than the height of the lands 128 and grooves 130 and the depth of the channels 120 in the interior active region 122. Alternatively, the height of the lands 128 and grooves 130 and the depth of the channels 112 in the distribution area 112 may be less than the height of the lands 128 and grooves 130 and the depth of the channels 120 in the interior active region 122.

A flange 132 may be provided in the main flow field channels 120, but not provided in the distribution channels 112. In exemplary embodiments, a flange 132 is provided in the distribution channels 112, but a flange 132 is not provided in the main flow field channels 120 (see FIG. 3C). The flange 132 located below the groove 130 on the backside of the distribution channels 112 in a plate 100 and/or 101 acts as a stopper to provide a barrier for a seal 134, whereby creating a sealing groove 130 or grooves 130 that may further comprise a seal 134.

A variable groove depth of the plate 100 and/or 101 refers to the maximum area, depth, and/or volume of the groove 130 portion of the land 128 and/or the channels 112, 120 being changed, varied, and/or reduced in order to facilitate or control the amount, volume, and/or direction of fluid 124, 138 flow. The variable groove depth may be mechanically, manually, and/or automatically manipulated, such that a maximum depth, amount, or volume of fluids 124, 138 that flow through the groove 130 of the land 128, the distribution channels 112, and/or the main flow fields 120 is changed and/or varied within the distribution channels 112 and/or main flow fields 120 of the plate 100 and/or 101. For example, the groove 130 depth of the distributions channels 112 comprising the flange 132 may be configured to be less than the full or maximum groove 130 depth of the land 128 of the main flow field channels 120. In exemplary embodiments, distribution channel 112 depths are created to be less than the main flow field channel 120 depths in order to enable the flange 132, the sealing groove 130, and/or a seal 134 to stop or prevent movement of the seal in a direction of the fluid 124, 138 flow.

The flange 132 is a structural feature that independently effects and/or increases the variable groove depth of the groove 130 and land 128 portion of the plate 100 and/or 101. For example, the groove 130, land 128, and/or channel 112, 120 depth comprising the flange 132 is greater than the groove 130, land 128, and/or channel 112, 120 depth without the flange 132. However, in exemplary embodiments, the flange 132 is also configured to couple with a seal 134 to effect, vary, change, and/or reduce the variable groove depth of the groove 130 and land 128 portion of the plate 100 and/or 101.

The seal 134 may be made of any material known in the art to seal or close a manifold, tube, pipe, orifice, and/or compartment. The seal 134 material is any polymer, rubber, epoxy, and/or gel material that may seal a component. In an exemplary embodiment, the seal 134 is made of rubber.

The seal 134 may be comprised of one or more seals 134 in order to provide a partially or completely closed system within the plate 100 and/or 101. For example, the seal 134 may comprise a single seal 134, such as a single seal 134 located on the hydrogen side 106 or the water side 104 of the plate 100 and/or 101. The seal 134 may also be comprised of one or more, more than one, multiple, and/or a plurality of seals, including any number of seals 134 necessary to provide a partially or completely closed system within the plate 100 and/or 101. An exemplary multiple seal 134 embodiment may comprise about two, three, four, five, or more seals located on the water side 104 or the hydrogen side 106 of the plate 100 and/or 101.

Referring back to FIG. 3C, the seal 134 on the plate 100 and/or 101 may be of any type and may be located in any position necessary to impact fluid 124, 138 flow. A seal 134 may be an inner seal 134. An exemplary embodiment, is an inner seal 134 on the flange 132 of the distributions channels. The seal 134 may also be an outer seal 144, such as the seal 144 on the periphery of the plate 100 and/or 101 to aid in seal-to-seal alignment and/or seal-to-plate compression between multiple plates 100 and/or 101 in a stack 11, 12.

As shown in FIG. 3C, the seal 134 may be located in proximity to contact the land 128 in order to close or seal the land 128 region. For example, the seal 134 may be provided to be in contact with the flange 132 region of the land 128. Preferentially, placement of the seal 134 provides contact to and within the flange 132 region (e.g., the inner flange) of the land 128, which may partially, substantially, completely, and/or totally seal the flange 132 portion of the land 128.

In an exemplary embodiment shown in FIG. 3C, the seal 134 totally and completely seals or closes the flange 132 portion of the land 128, such that the plate 100 and/or 101 is air tight, pressure resistant, and/or completely closed in the flange 132 region. In such a plate 100 and/or 101 embodiment where the flange 132 is sealed via the seal 134, the groove 130 portion of the land 128 may still be open for fluid 124, 138 flow. In such embodiments, the plate 100 and/or 101 will provide a closed system that is able to maintain separation of the fluids 124, 138 in different portions 130, 132 of the land 128 and the channels 112, 120 in order to reduce and/or prevent leakage and/or cross-contamination of the fluids 124, 138.

Importantly, the present plate 100 and/or 101 enables the complete and total separation of hydrogen (H₂) and oxygen (O₂) gases. As noted earlier in the hydrogen-generating electrochemical reactions that take place within an electrolyzer, water is the main reactant. When water is electrochemically split, it produces pure hydrogen (H₂) gas, along with oxygen (O₂) gas and water vapor as chemical byproducts.

In addition, oxygen (O₂) gas exits or exhausts as a byproduct from the anode side 104 and/or the cathode side 104 via the outlets or out ports 108. In an exemplary embodiment, the oxygen (O₂) gas is removed from the anode side 104 so as to not allow the oxygen (O₂) gas to mix with the hydrogen 138 on the cathode side 106 of the plate 100 and/or 101. The seals 134 and sealing configuration of the plate 100 and/or 101 are critical to provide a pressure boundary across the anode side 104 and the cathode side 106 of the plate 100 and/or 101 in order to prevent the leakage, cross-contamination, and/or mixing of fluids, such as hydrogen (H₂) and oxygen (O₂) gases, located on the anode side 104 and the cathode side 106. Accordingly, the seals 134 and sealing configuration of the present plate 100 and/or 101 increase the safety and functionality of the electrolyzer plate 100 and/or 101, cell 80, stack 11, 12, and system 10. Moreover, in some embodiments, the seals 134 enable facilitation of flow of both water 124 and hydrogen 138 on either and/or both sides 104, 106 of the plate 100 and/or 101.

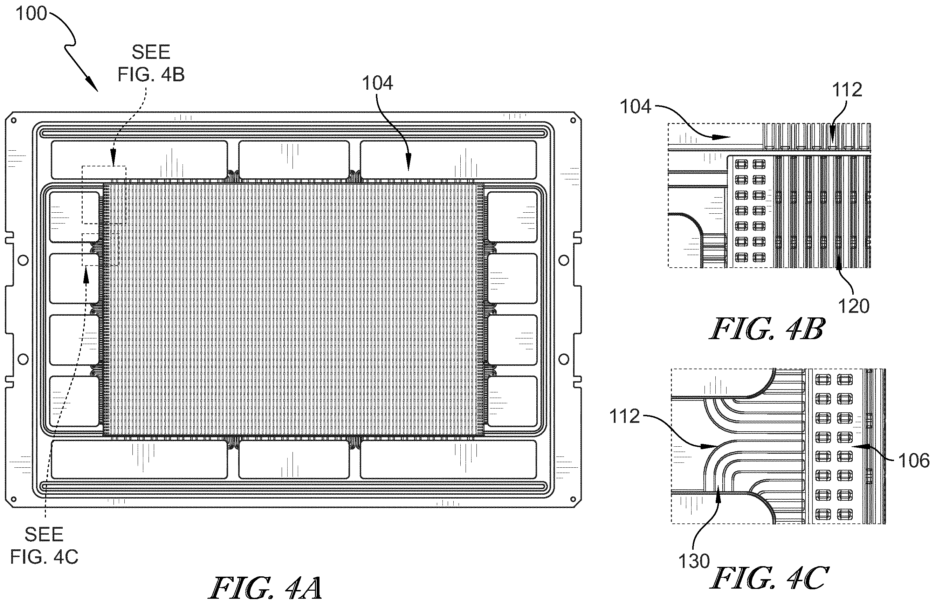

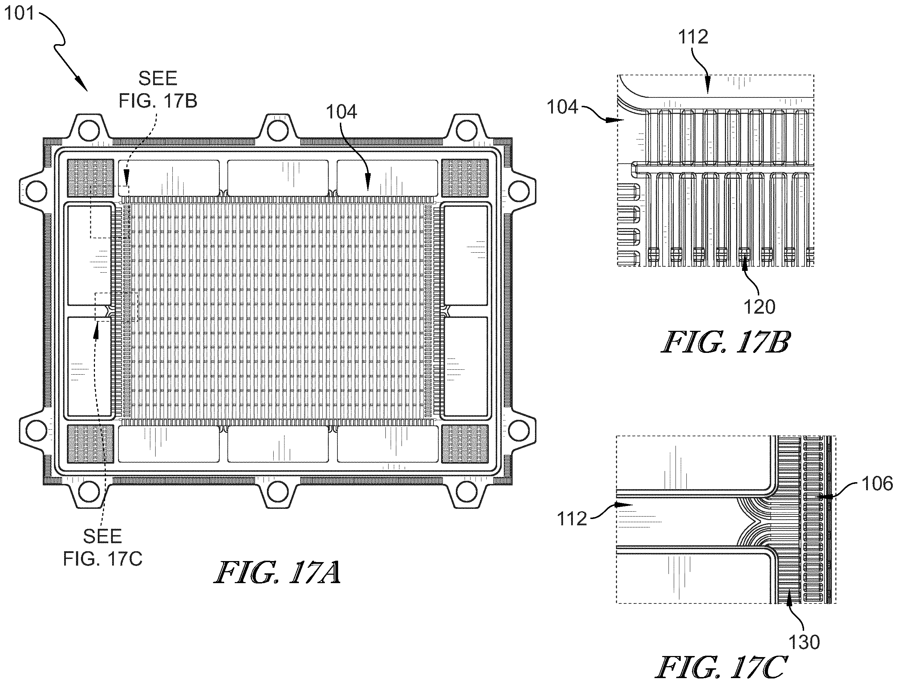

FIG. 4A shows the top, anode, and water side 104 of the single sheet bipolar electrolysis plate 100 embodiment with no seals 134. FIG. 17A shows the top, anode, and water side 104 of the single sheet bipolar electrolysis plate 101 embodiment with no seals 134. The water distribution channels 112 and the water main flow field channels 120 on the water and anode side 104 are also shown in detail in FIGS. 4B and 17B. FIGS. 4C and 17C further show the hydrogen sealing grooves 130 with no seal 134 on the anode side 104 of the plate 100 and 101 respectively.

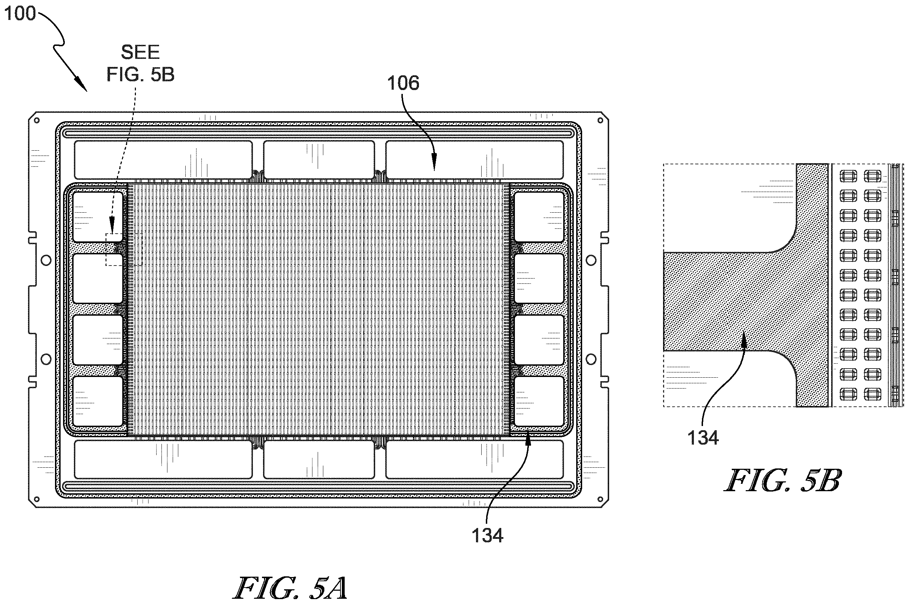

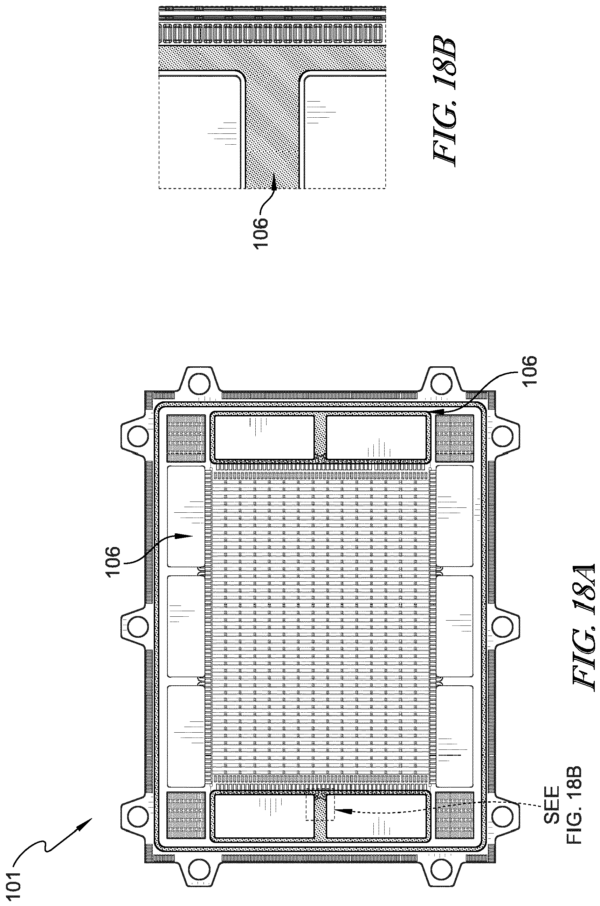

FIG. 5A also shows the top/anode/water side 104 of the plate 100 embodiment shown in FIG. 4A having the seal(s) 134. In particular, one or more, two or more, or three or more, such as a plurality of seals 134, are located in the hydrogen sealing grooves 130 on the bottom/hydrogen/cathode side 106 of FIG. 5B. Similarly FIG. 18A shows the top/anode/water side 104 of the plate 101 embodiment shown in FIG. 17A having the seal(s) 134. In this sealed and closed plate 100 and/or 101 configuration, an anode side 104 flow of water 124 is permitted by the hydrogen seals 134 and channels 112, 120 of the plate 100 and/or 101.

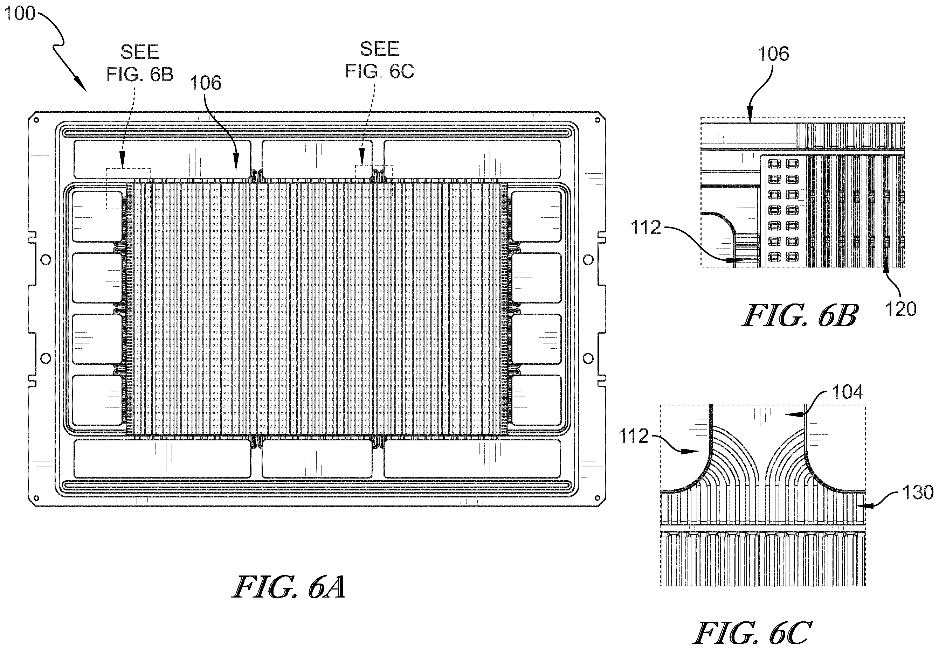

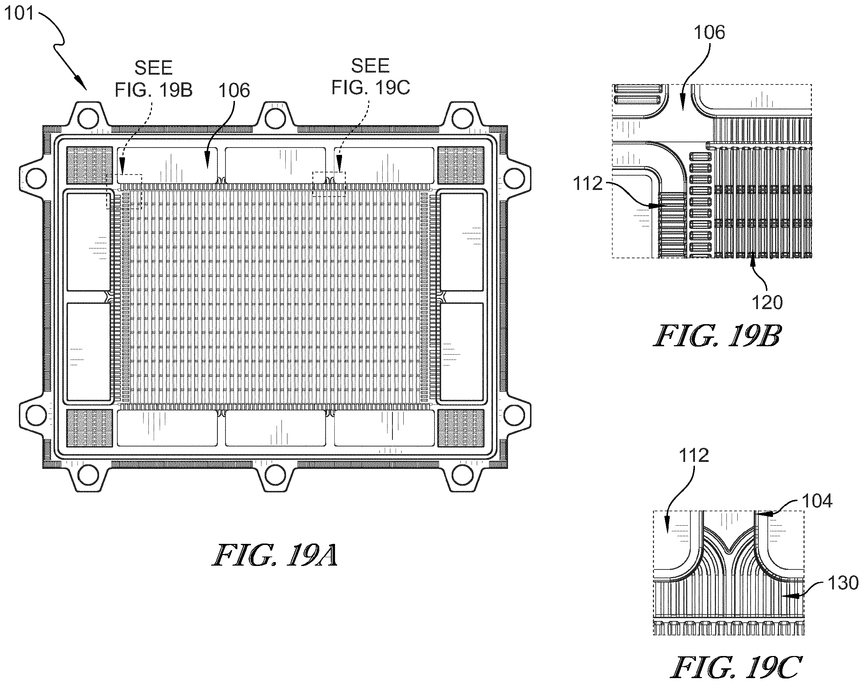

FIG. 6A shows the bottom/hydrogen/cathode side 106 of the single sheet bipolar plate 100 embodiment with no seals 134. FIG. 19A shows the bottom/hydrogen/cathode side 106 of the single sheet bipolar plate 101 embodiment with no seals 134. The hydrogen distribution channels 112 and the hydrogen main flow field channels 120 on the cathode side 106 are also shown in detail in FIGS. 6B and 19B. FIGS. 6C and 19C further show the water sealing grooves 130 with no seals 134 on the backside of the cathode side 106 of the plate 100 and 101 respectively.

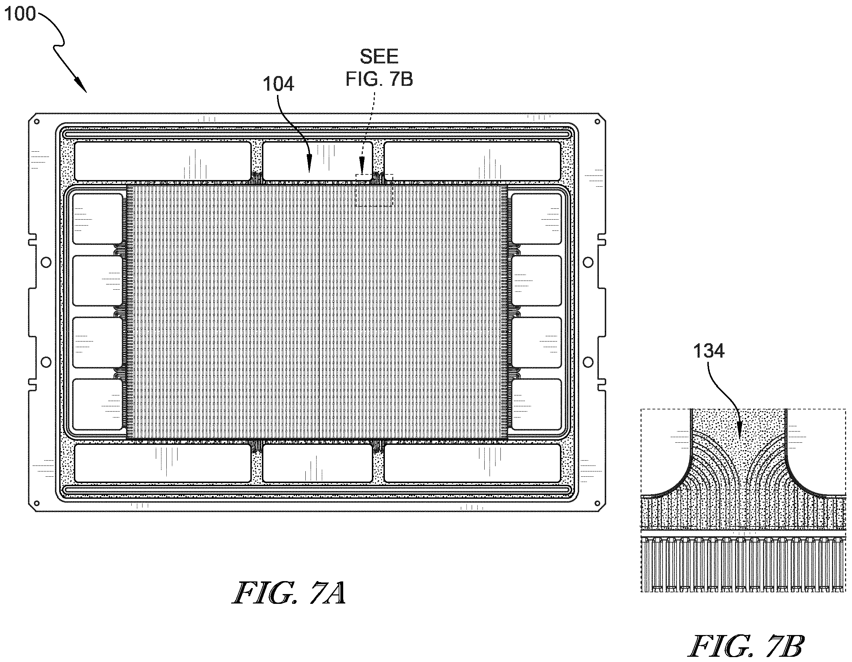

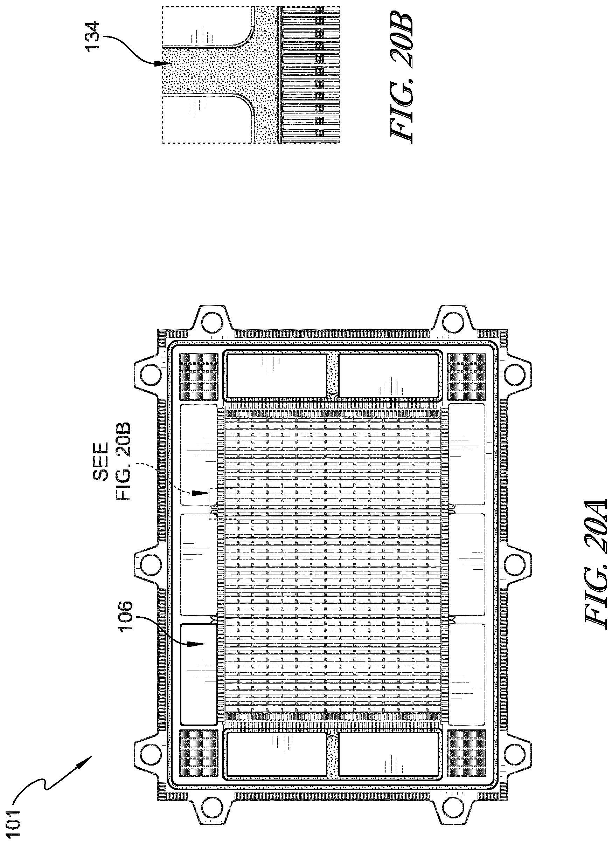

FIG. 7A also shows the bottom/hydrogen/cathode side 106 of the single sheet bipolar plate 100 embodiment of FIG. 6A having the seal(s) 134. FIG. 20A shows the bottom/hydrogen/cathode side 106 of the single sheet bipolar plate 101 embodiment of FIG. 19A having the seal(s) 134. In particular, one or more, two or more, or three or more, such as a plurality of seals 134, are located in the water sealing grooves 130 on the top/water/anode side 104 of FIGS. 7B and 20B. In this sealed and closed plate 100 and/or 101 configuration, a cathode side 106 flow of hydrogen 138 is permitted by the water seals 134 and channels 112, 120 of the plate 100 and/or 101.

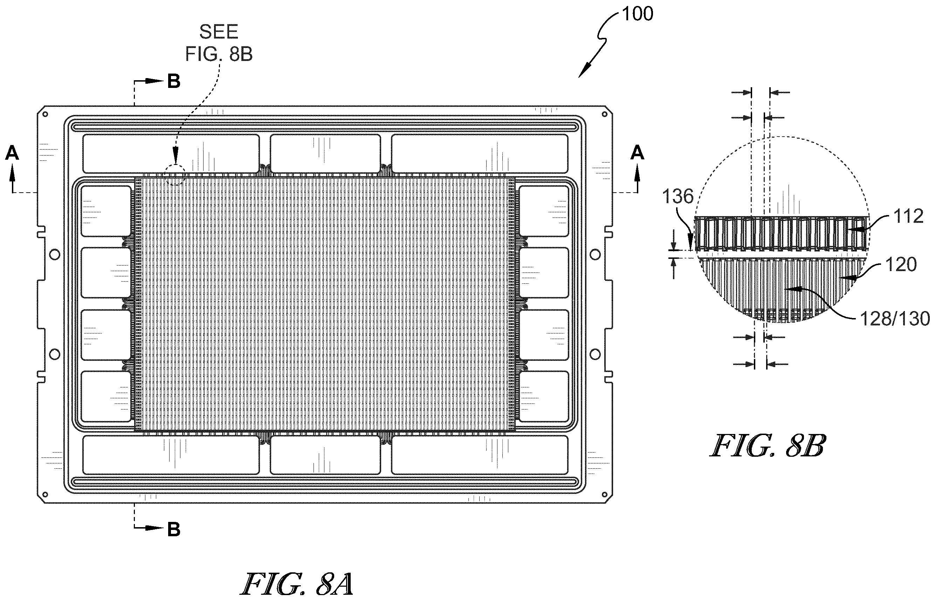

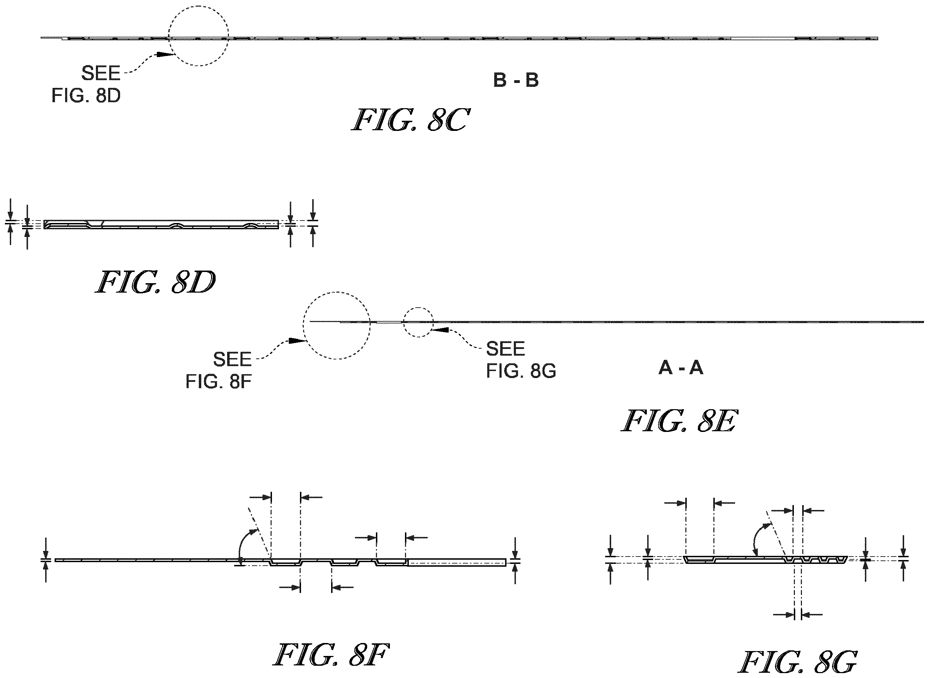

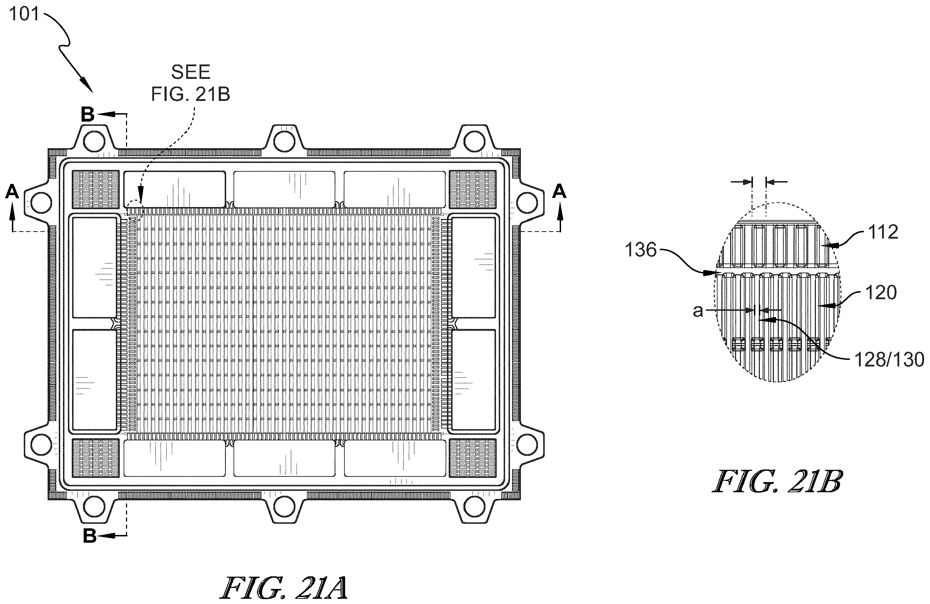

The dimensions of the distribution channels 112, the main flow fields 120, the seal(s) 134, the land 128, the groove or sealing groove 130, and/or the flange 132 of the plate 100 and/or 101 may be any size, shape, or dimension necessary to facilitate flow of fluids 124, 138 to and throughout the plate 100 and/or 101 for optimal performance of the cell 80, stack 11, 12, or system 10. For example, the distribution channels 112, the seal(s) 134, the groove 130, the land 128, main flow fields 120, and/or the flange 132 of the plate 100 and/or 101 may be any size necessary to provide flow and distribution of the anode and cathode fluids 124, 138 (e.g., water and hydrogen) throughout the interior active portion 122 of the plate 100 and/or 101. Details of the dimensions and depth of the flow and distribution channels 112, the seal 134, and the flange 132 in plate 100 are shown in FIGS. 8A-8G and 21A-21B.

While not limited to any such specific dimensions, FIG. 8A shows the plate embodiment 100 having a cross-sectional length at line A-A and a cross-sectional width at line B-B. Plate 100 also comprises feature F. Similarly, FIG. 21A shows a plate embodiment 101 having a cross-sectional length at line A-A and a cross-sectional width at line B-B. Plate 101 also comprises feature A as shown in FIGS. 21A and 21B.

Specifically, FIG. 8B shows an embodiment of the unformed area 136 of the plate 100 between the main flow field channels 120 and the distribution channels 112 having a distance of about 0.8 mm to about 1.4 mm, including any specific or range of distance comprised therein. In addition, an embodiment of the cross-sectional width (2) of the groove 130 may be about 1 mm to about 4 mm, including any specific or range of distance comprised therein. An embodiment of the cross-sectional width (3) of the land 128 may be about 0. 4 mm to about 2 mm, including any specific or range of distance comprised therein.. Similarly, FIG. 21B shows an embodiment of the unformed area 136 of the plate 101 between the main flow field channels 120 and the distribution channels 112 having similar dimensions as the plate 100.

FIG. 8C shows an embodiment of the groove depth across cross-section B-B in 0.25 mm scale. Further, FIG. 8D shows an embodiment of the cross-sectional height of the main flow field 120 may be about 0.3 to about 0.7 mm, including any specific or range of distance comprised therein. An embodiment of the distribution channels 112 of plate 100 may have a cross-sectional height of about 0.4 mm. FIGS. 8E-8F show an embodiment of the plate 100 and/or 101 thickness across cross-section A-A may be about 0.2 mm to about 0.7 mm, including any specific or range of distance comprised therein. The sealing grooves 130 and flanges 132 have a depth or thickness of ranging from about 0.7 mm to about 5 mm, including any specific or range of distance comprised therein.

Similar to the lands 128, grooves 130, and flanges 132 of the distribution channels 112, the main flow field channels 120 of the single sheet bipolar plate 100 and/or 101 for stack 11, 12 assembly may also comprise structural features to aid and/or facilitate fluid 124, 138 flow. Humps 140 and/or cavities 142 are structural features provided within the formed structure of the main flow fields 120 of the single sheet bipolar plate 100 and/or 101 for stack 11, 12 assembly. Humps 140 and/or cavities 142 specifically effect the flow and distribution of fluids 124, 138 through the interior active portion 122 of the plate 100 and/or 101, particularly within the main flow fields 120.

Humps 140 and/or cavities 142 located on one side 104, 106 of the plate 100 and/or 101 are configured to effect, increase, and/or facilitate fluid 124, 138 flow in the main flow fields 120 on the same and/or the opposite side 104, 106 of the plate 100 and/or 101. Specifically, fluid 124, 138 flowing over humps 140 in the main flow fields 120 of a first side 104, 106 of the plate 100 and/or 101 may experience a local increase in speed and/or velocity due to the presence of the one or more humps 140 in those channels 120.

While the speed and/or velocity of the fluid 124, 138 will change throughout its path through the channels 112, 120 of the plate 100 and/or 101, the flow rate of the fluid 124, 138 will not change. An operational flow rate of the fluids 124, 130 within the plate 100 and/or 101 channels 112, 120 is typically automatically, electronically, and/or manually predetermined, such as by an operator, producer, manufacturer, or person, and can be changed throughout operation. There is no limitation on the fluid 124, 138 flow rate as long as other functional plate 100 and/or 101 parameters, such as fluid velocity and pressure drop, remain within operational limits.

Notably, the fluid 124, 128 flow rate is also correlated and/or proportional to (e.g., dependent on) the number of channels 112, 120 on the plate 100 and/or 101 and/or the number of plates 100 and/or 101 in the stack 11, 12. A stack 11, 12 may be any number of plates 100 and/or 101. Illustratively, one stack 11, 12 may have about 10 to about 10,000 plates 100 and/or 101, including any number comprised therein. While any flow rate of fluids 124, 138 may be utilized by the plate 100 and/or 101, an illustrative flow rate of a fluid 124, 138 in the plate 100 and/or 101 may range from about 1 L/min to about 200 L/min per plate, including any flow rate comprised therein.

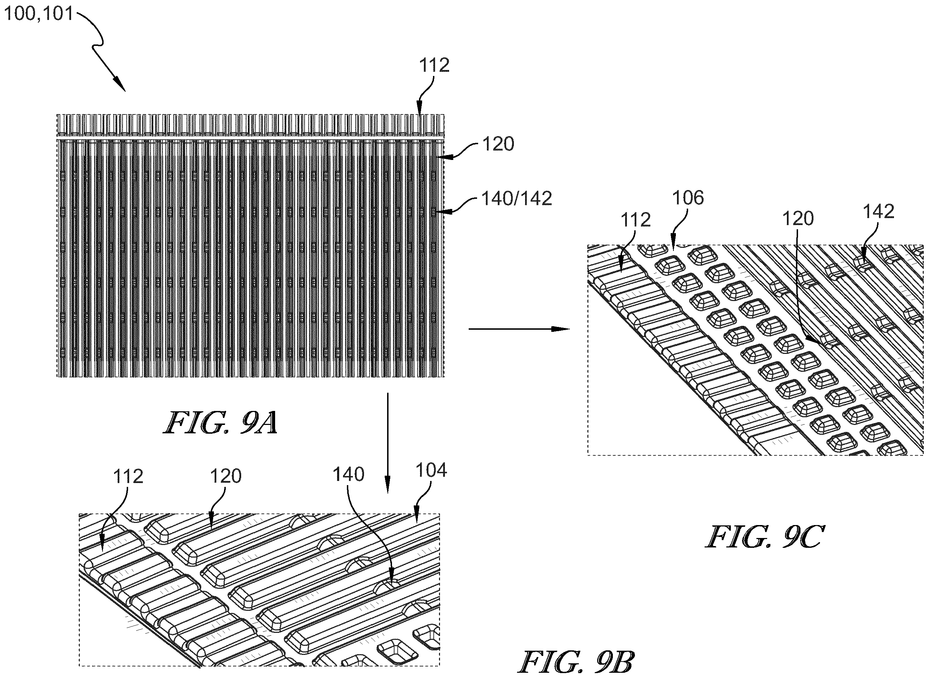

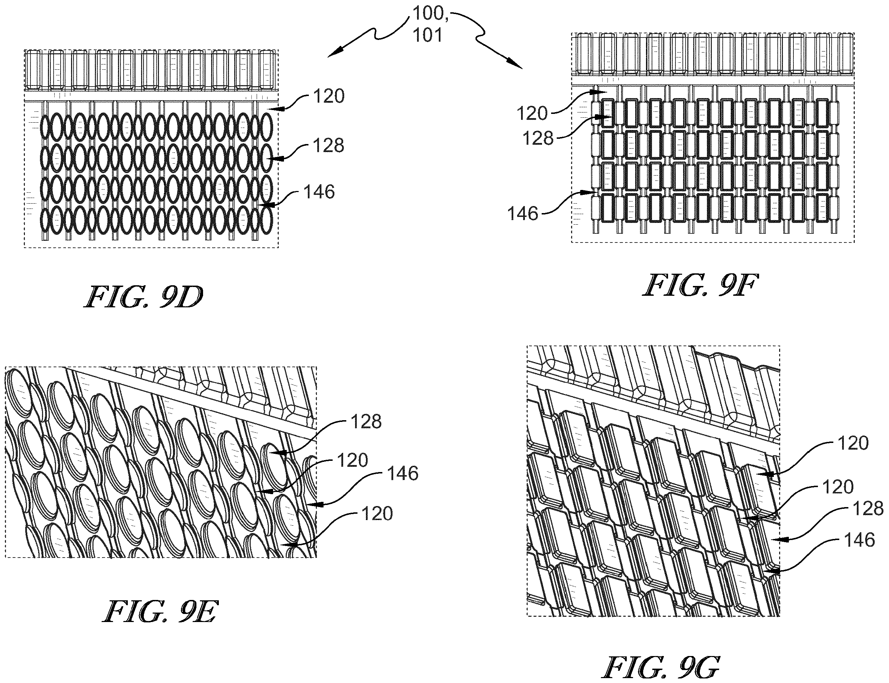

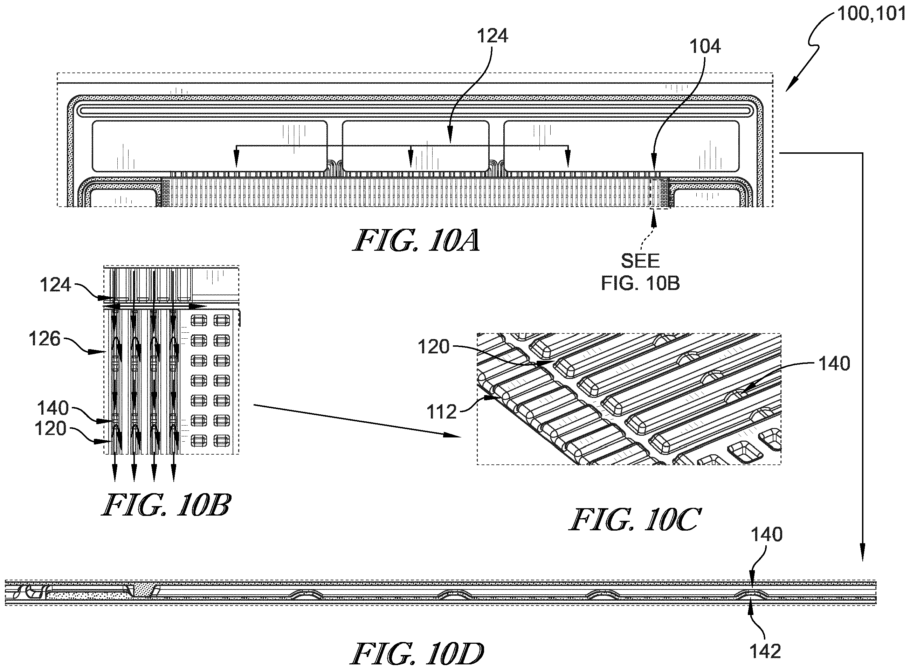

In addition, fluids 124, 138 flowing over humps 140 in the main flow fields 120 may facilitate cross-flow 126 of fluid 138 flowing in cavities 142 in the main flow fields 120 of a second, opposite side 104, 106 of the plate 100 and/or 101. As shown in FIG. 9A, the main flow fields 120 of the plate 100 and/or 101 may include one or more, two or more, or a plurality of humps 140 and/or cavities 142 on either side 104, 106. Humps 140 and cavities 142 of the main flow fields 120 facilitate the cross-flow of fluids 124, 138 (e.g., water and hydrogen), such that the fluids 124, 138 may flow in different directions on a single sheet bipolar plate 100 and/or 101 (see FIG. 10D).

FIG. 9B shows a plurality of humps 140 located within the main water flow fields 120 on the top/water/anode side 104 of the of the plate 100 and/or 101. FIG. 9C shows a plurality of cavities 142 located on the bottom and opposite side 106 of the same plate 100 and/or 101 within the hydrogen and cathode main flow fields 120. Notably, the water 124 flowing over the humps 140 in the main flow field channels 120 on the anode side 104 moves in a different direction or orientation (e.g., cross-flow 126) than the hydrogen 138 flowing in the cavities 142 in the main flow field channels 120 on the cathode side 106 of the plate 100 and/or 101. The water 124 over the hump 140 flows in a vertical or North-to-South direction while the hydrogen flows in the cavities 142 in the horizontal or East-to-West direction.

Humps 140 may be provided by any formable feature that facilitates the flow of media (e.g., liquid or gas), water, electrolyte, and/or coolant in any predetermined direction. For example, the shape and/or size of the hump 140 may be any shape or size that facilitates, changes, decreases, and/or increases the speed or velocity of fluid 124, 138 flow (although fluid 124, 138 flow rate remains the same). In particular, the humps 140 may be any shape, including but not limited to squares, rectangles, triangles, ovals, circles, chevrons, dimples, hearts, lines, etc.

The exemplary hump 140 embodiments shown in FIG. 9A-9C have a curved shape that protrudes vertically above portions of the main flow field channels 120 that remain relatively or substantially unformed 136 on the top side 104 of the plate 100 and/or 101. Notably, the height of the hump 140 may not protrude above the maximum height of the lands 128 or grooves 130 in the main flow field channels 120 of the inner active region 122. In some embodiments, the hump 140 does not protrude above the main flow field 120 of the plate 100 and/or 101.

In addition to main flow field channels 120 having continuous, linear, and/or straight flow paths (see FIGS. 2A-9B, 16A-21B), alternative main flow field channel 120 embodiments may be adopted in the plate 100 and/or 101. For example, main flow field channels 120 can be of any profile, size, shape, dimension, and/or depth necessary to flow fluids 124, 138. For example, lands 128 creating the main flow field channels 120 may have any shape, such as the oval or rectangular shapes shown in FIGS. 9D-9E and 9F-9G, respectively.

In addition, the main flow fields 120 may be structurally provided by truncated, separated, and/or individual lands 128 along the main flow field (see FIGS. 9D-9G) rather than a single, consistent land 128 that creates a single, linear main flow field channel 120 (see FIGS. 2A-9B, 16A-21B). As shown in FIGS. 9D-9G, these separated lands 128 on the main flow field channels 120 create a crisscross pattern 146 of channels 120 on a single side 104, 106 of the plate 100 and/or 101. Accordingly, fluids 124, 138 may flow in the crisscross pattern 146 of main flow field channels 120 in both directions (e.g., vertically and horizontally) on both the top side 104 and the bottom side 106 of the plate 100 and/or 101.

In the exemplary alternative main flow field channel 120 comprising a crisscross pattern 146 of FIGS. 9D-9G, water 124 may flow in both a vertical direction (e.g., a top-to-bottom and a North-to-South direction or a bottom-to-top and a South-to-North direction) and a horizontal direction (e.g., a left-to-right and an East-to-West direction or a right-to-left and a West-to-East direction) on the top side 104 of the plate. At the same time, hydrogen 138 may flow in both a vertical direction (e.g., a top-to-bottom and a North-to-South direction or a bottom-to-top and a South-to-North direction) and a horizontal direction (e.g., a left-to-right and an East-to-West direction or a right-to-left and a West-to-East direction) on the bottom side 106 of the plate 100 and/or 101.

Main flow field channels 120 may also flow at any angle, orientation, and/or direction. In some embodiments, the main flow field channels 120 may flow fluids 124, 138 such that the fluids turn corners or flow in various patterns (e.g., zigzag, crisscross, curves, corners, etc.). In further embodiments, the profile, size, dimensions, depths, and/or direction provided by the main flow field channels 120 can also be adopted, mimicked, and/or represented in the distribution channels 112 and the sealing grooves 130 of the plate 100 and/or 101.

The humps 140 are primarily provided to the main flow field channels 120 on the top side 104 of the plate 100 and/or 101 to create the cavities 142 to facilitate and/or enable hydrogen 138 flow. However, fluid 124, 138 flow speed and/or velocity will be increased at the humps 140 throughout the interior active region 122 of the plate 100 and/or 101 to maintain the constant and predetermined flow rate. This increase in the fluid 124, 138 speed and velocity at the humps 140 increased heat transfer in the plate 100 and/or 101 all at the same time, which is advantageous and improves operation of the cell 80, stack 11, 12, or system 10.

The arrows in FIG. 10B represent the water 124 flow from the distribution channels 112 into the main flow fields 120 and over the humps 140 located therein. FIG. 10C also shows the humps 140 located in the water main flow fields 120 on the top side 104 of the plate 100 and/or 101. FIG. 10D is a cross-sectional view of the single sheet bipolar plate 100 and/or 101 for stack assembly showing the humps 140 arranged on the top side 104 of the plate 100 and/or 101 while forming cavities 142 located on the bottom side 106 of the plate 100 and/or 101.

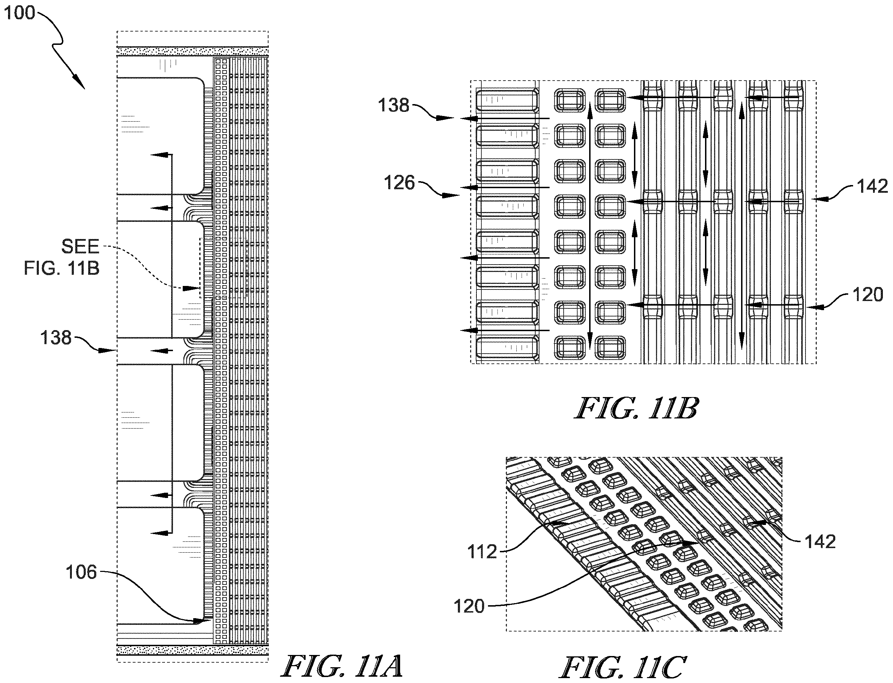

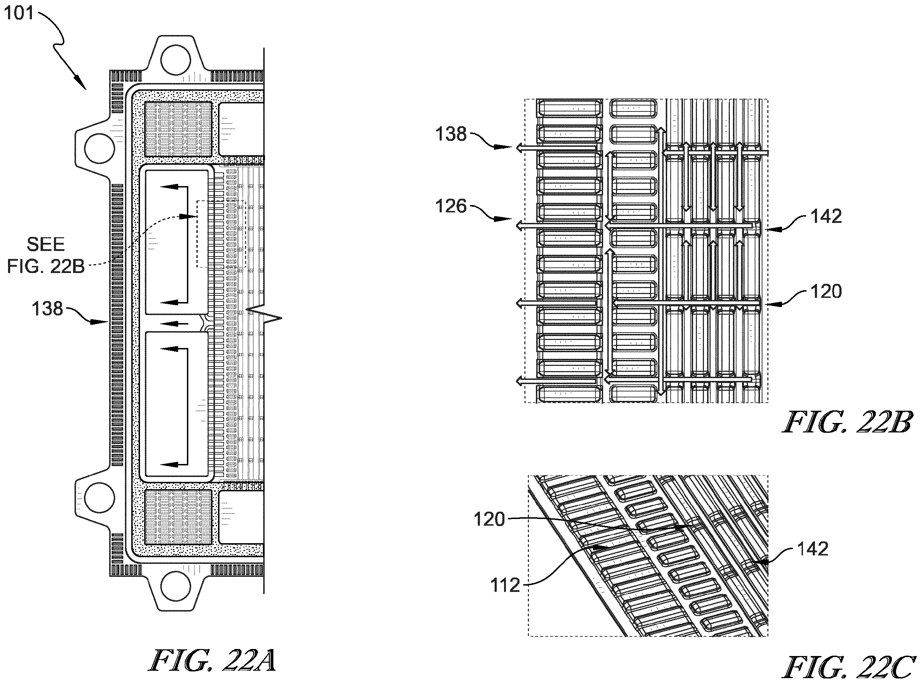

FIGS. 11A and 11B show the hydrogen 138 flow (arrows) from the distribution channels 112 horizontally and/or in an East-to-West direction into the main flow fields 120 on the bottom side 106 of the plate 100. FIGS. 22A and 22B show the hydrogen 138 flow (arrows) from the distribution channels 112 horizontally and/or in an East-to-West direction into the main flow fields 120 on the bottom side 106 of the plate 101. Once in the main flow fields 120, the hydrogen 138 continues to flow below the humps 140, such as within a plurality of cavities 142, on the bottom side 106 of the plate 100 and/or 101. FIG. 11C and 22C also shows the cavities 142 located in the hydrogen main flow fields 120 on the bottom side 106 of the plate 100 and 101 respectively.

Importantly, FIGS. 3D, 10B, 11B, and 22B demonstrate that the hydrogen 138 on the bottom side 106 of the plate 100 and/or 101 flows in a different, opposite, and/or cross direction (e.g., horizontally and/or in an East-to-West direction) as the direction of the water 124. Specifically, FIG. 3D demonstrates that the water 124 flows in a different, opposite, and/or cross direction 126 (e.g., vertically and/or in an North-to-South direction) on the top side 104 of the plate 100 and/or 101 than the hydrogen 138 flows on the bottom side 106 of the plate 100 and/or 101 (e.g., horizontally and/or in an East-to-West direction). Therefore, the water and hydrogen fluids 124, 138 have a cross-flow configuration 126 on the two sides 104, 106 of the plate 100 and/or 101, such that the fluids 124 (e.g., water and hydrogen) do not flow in the same direction.

Accordingly, this cross-flow configuration 126 of the fluids 124 also aids to improve thermal management of the fluids 124, 138 within the plate 100 and/or 101. The humps 140 and cavities 142 of the main flow fields 120 further contribute to improved thermal management of the fluids 124 by the plate 100 and/or 101. Specifically, the high speed of fluid 124 (e.g., water) flow over the humps 140 promotes convective heat transfer between the fluids 124, 138. The humps 140 also act (e.g., as fins) to elongate the length of the main flow fields 120, which promote more conductive heat transfer. Accordingly, the humps 140 on a first side 104 of the plate 100 and/or 101, and their resulting cavities 142 on the opposite, second side 106 of the plate 100 and/or 101, particularly aid to improve the thermal (heat) management and transfer capability of the electrolyzer plate 100 and/or 101 and the electrolyzer cell 80.

Collectively, the formed structural features of the present single sheet bipolar plate 100 and/or 101 for stack 11, 12 assembly, including the distribution channels 112 and the flange 132 and sealing grooves 130, particularly coupled with the seals 134, along with the main flow field channels 120, including the humps 140 and the cavities 142, validate the feasibility and functional utility of the plate 100 and/or 101 for stack assembly, promote operational efficiency and optimal performance, function, life, and durability of an electrolyzer cell 80, stack 11, 12, or system 10. The presently described plate 100 and/or 101 maintains or achieves the desired flow field configurations and sealing requirements necessary for electrolyzer plate 100 and/or 101 forming, manufacturing, and/or operation, while keeping other formability parameters within acceptable threshold limits (e.g., material management, flow pressure drop, erosional and/or local velocity, thermal management, and mechanical plate loading and maintenance of electrochemical plate components).

Additional operational or manufacturing benefits of the present single sheet bipolar plate 100 and/or 101 for stack 11, 12 assembly include cost effectiveness (e.g., due to reduced hardware utility), less pressure drop across the membrane or electrolyte 118, and lightweight and/or compact design. Again, the present plate 100 and/or 101 provides improved thermal management and suitability for mass commercial production. Importantly, the plate 100 and/or 101 provides an open, partially sealed, or fully sealed and/or closed system with closed reactants, and an ability to operate at higher power or current density (e.g., such as from about 5 Amp/cm² to about 20 Amp/cm², including any current density comprised therein).

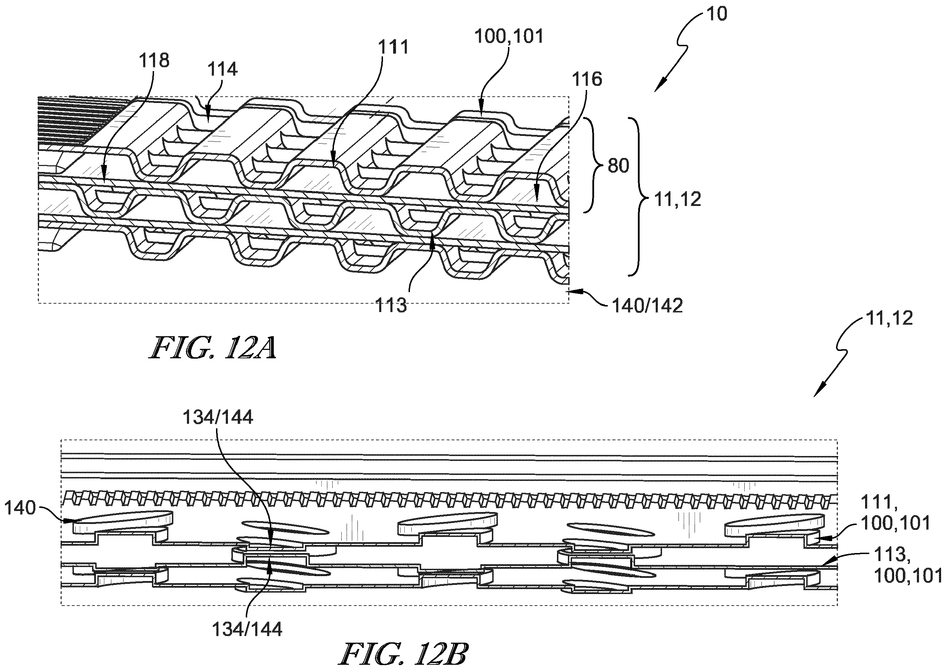

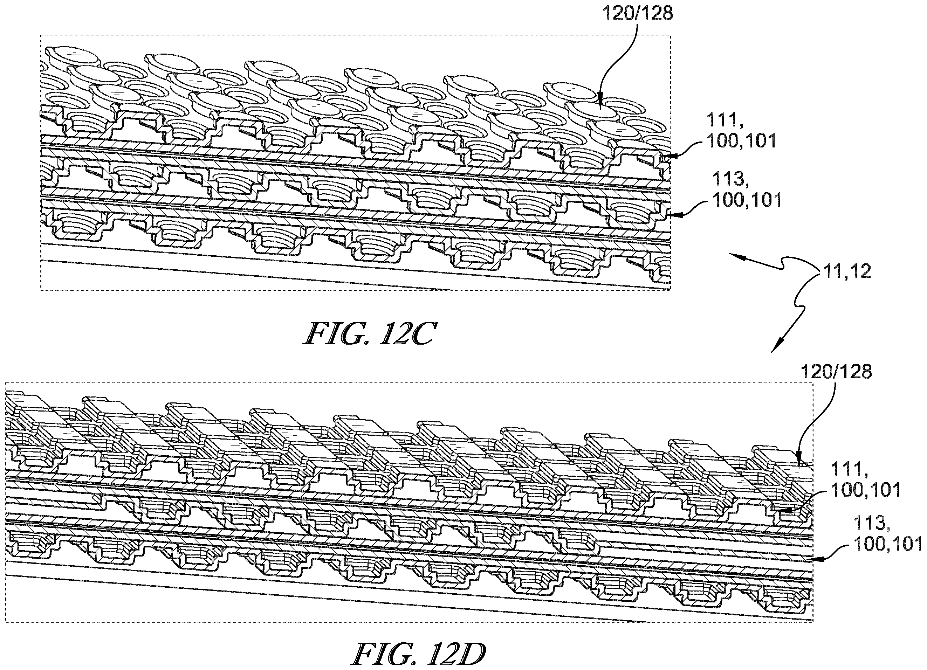

The present disclosure is also directed to an electrolyzer cell stack 11, 12 comprising one or more embodiments of the single sheet bipolar plate 100 and/or 101 for stack 11, 12 assembly described herein. More specifically, the electrolyzer cell stack assembly 11, 12 may comprise one or more, two or more single sheet bipolar plates 100 and/or 101 for stack assembly having one, two, or more distinct, different, and/or complementary plate designs, patterns, or configurations. For example, referring to FIG. 12A, the cell stack 11, 12 may comprise one or two plate 100 and/or 101 embodiments having a different forming configuration.

Specifically, FIG. 12A shows plate 100 and/or 101 having two forming configurations, a Type A 111 plate configuration and a Type B 113 plate configuration. The Type A 111 plate forming configuration produces a different formed structure for the plate 100 and/or 101 than the formed structure provided by the Type B 113 plate forming configuration. Specifically, the Type A 111 plate and the Type B 113 plate have an offset positional configuration. For example, the channel 112, 120 configuration of the Type A 111 plate is slightly offset from the channel configuration of the Type B 113 plate.

As shown in FIG. 12A, the first flow field channel 120 of the Type A 111 plate is located one (1) channel later than or after the first flow field channel 120 on the Type B 113 plate. Said differently, the Type A 111 plate begins with a land 128 while the Type B 113 plate begins with a channel 120 or groove 130, thereby creating an offset plate assembly configuration. This offset plate stacking or assembly configuration allows the land 128 of one plate 100 and/or 101 to be stacked upon the groove 130 or channel 128 of another plate 100 and/or 101 (or vice versa), so that the plates 100 and/or 101 support each other in the stack and do not collapse in on one another.

Referring again to FIG. 12A, the first Type A 111 plate comprises a top side 104 configured to receive and distribute water 124, while the bottom side 106 of Plate A 111 is configured to received and distribute hydrogen 138. The Type B 113 plate also comprises a top side 104 configured to receive and distribute water 124, while the bottom side 106 of Plate B 113 is configured to received and distribute hydrogen 138. However, in the stack 11, 12, the main flow field channels 120 of the Type A 111 plates are offset by about one-half (1/2) to one (1) full channel (width) with the main flow field channels 120 of the Type B 113 plates. In other embodiments, the offset of the main flow field channels could be by any width or number of channels that enables the plates 100 and/or 101 in the stack 11, 12 to be complementary and not collapse into one another.

In this illustrative embodiment, the main flow fields 120 of the Type A 111 plate 100 and/or 101 are formed to alternate or be offset (by about ½ to about 1 channel width) with the main flow fields 120 of the Type B 113 plate configuration when placed in a stack 11, 12. Therefore the positioning or placement of the main flow fields 120 of the Type A 111 and B plates 113, comprising a plurality of humps 140, are stacked in a complementary, offset, and/or alternating orientation to provide a damage (e.g., bending or fracturing) resistant stack 11, 12. FIG. 12B shows another stack 11, 12 embodiment comprising two-configuration plates 100 and/or 101 with different placement positioning and/or orientation (e.g., Plates A and B). Notably, the plates 100 and/or 101 of FIG. 12B also have main flow fields 120 that have alternative shapes, such as dimples or chevron patterning.

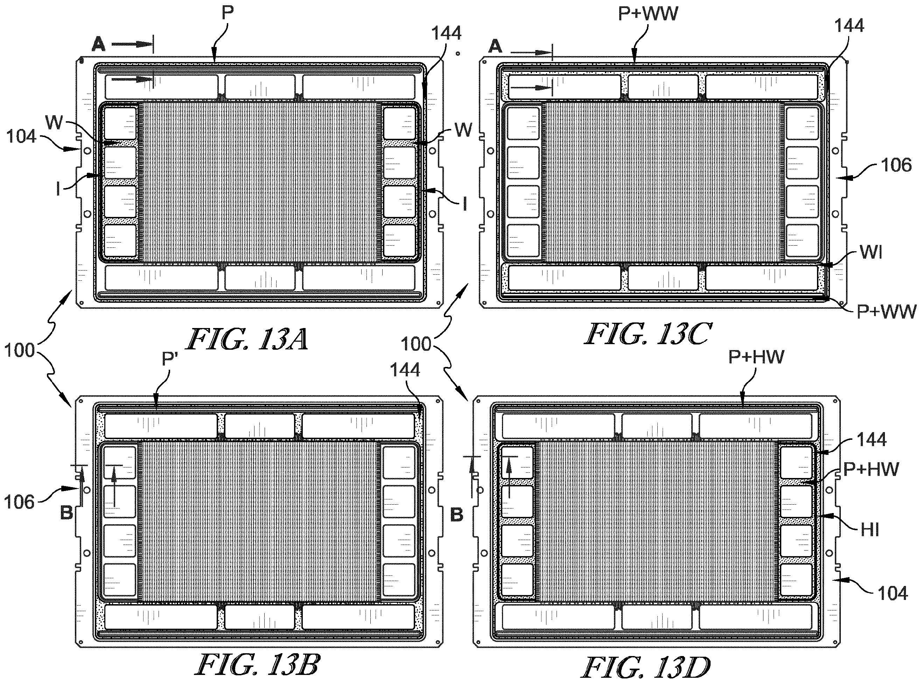

As described, stacking plates 100 and/or 101 having the same or different formed structure or forming configurations may provide different plate assembly configurations in an operational stack 11, 12. Specifically, plates 100 and/or 101 may be designed to have two, three, four, five, or more different formed structure or forming configurations. In exemplary embodiments shown in FIGS. 13A-14B and 23A-23D, plates 100 and/or 101 will have at least two different formed structure or forming configurations, such as a Type A 111 plate or Plate A 111 and Type B 113 plate or Plate B 113 (e.g., multi-configuration or bi-configuration design or structural formation).

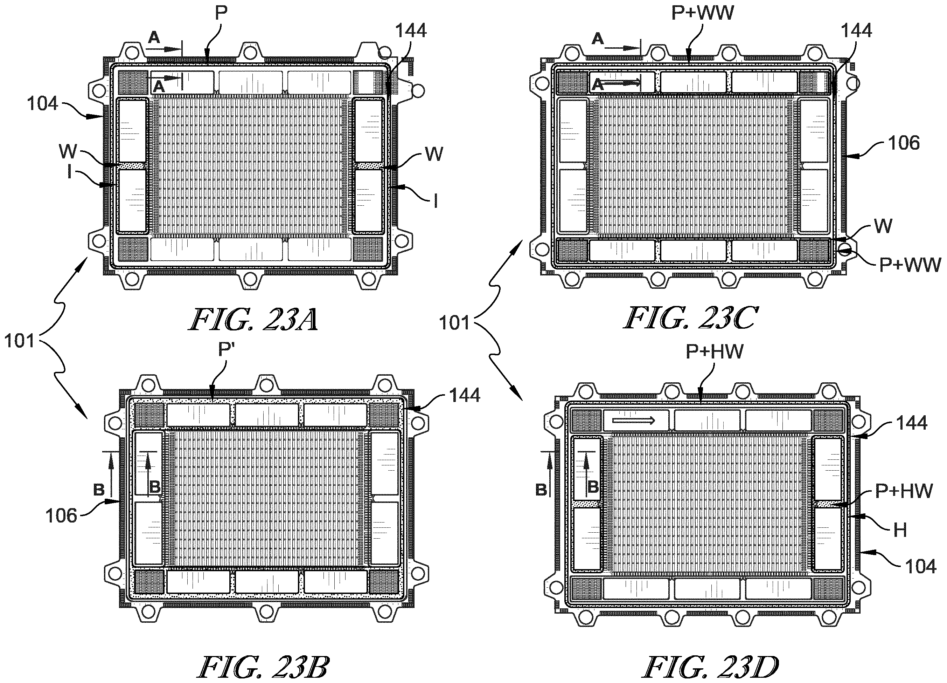

FIGS. 13A-13D demonstrate how the making, forming, and/or sealing configuration of the plate 100 (e.g., Plate A 111 and Plate B 113) may further improve the compression between plates 100 in the stack 11, 12, and consequently improve plate 100 and stack 11, 12 durability and performance. Similarly, FIGS. 23A-23D demonstrate how the making, forming, and/or sealing configuration of the plate 101 (e.g., Plate A 111 and Plate B 113) may further improve the compression between plates 101 in the stack 11, 12, and consequently improve plate 101 and stack 11, 12 durability and performance.

Specifically, a parallel groove forming may be employed to achieve an outer seal on the top side 104, the bottom side 106, or both sides 104, 106 of the plate 100 and/or 101. Different parallel groove forming configurations on the outer sealing area 144 of Plate A 111 and Plate B 113 may be employed to promote and/or support seal-to-seal alignment and/or seal-to-plate (e.g., seal-to-metal) compression between plates 100 and/or 101, such as Plate A 111 and Plate B 113, in a stack 11, 12. Such making, stacking, and/or sealing promotes seal 134, 144 flexibility and feasibility on the single sheet bipolar plate 100 and/or 101 for stack 11, 12 assembly.

An outer seal 144 may be applied to the outer periphery of the plate 100 and/or 101 or sheet 102, which constitutes an outer sealing area 144. The outer seal 144 also provides necessary or required mechanical support and/or resistance against any mechanical load on the outer periphery of the plate 100 and/or 101. Accordingly, the outer seal 144 contributes to the structural integrity and preservation of the plate 100 and/or 101.

For example, FIGS. 13A and 23A show an outer seal 144 and inner seal 134 on the water side 104 of the Plate A 111 embodiment. Similarly, FIGS. 13B and 23B show the outer seal 144 and inner seal 134 on the hydrogen side 106 of that same Plate A 111. Further, FIGS. 13C and 23C show an outer seal 144 and inner seal 134 on the hydrogen side 106 of the Plate B 113 embodiment. FIGS. 13D and 23D also show the outer seal 144 and inner seal 134 on the water side 104 of that same Plate B 113. Each of the outer seal 144 and the inner seal 134 may be provided by more than one seal. Alternatively, the outer seal **144** and the inner seal **134** may be the same, so as to provide a single, combined seal, as shown in FIGS. 13B and 23B.

In exemplary plate embodiments having different seal configurations, the water side 104 of Plate A 111 shown in FIGS. 13A and 23A comprise 5 total seals: 1) a single (1) full plate periphery seal (P), 2) two (2) hydrogen port window seals (HW) that are located around the four sides of the 4-window hydrogen ports, and 3) two (2) interim window port seals that are located outside of the window seals (W) but just around the outer three sides of the hydrogen port windows (I). The hydrogen side 106 of Plate A 111 shown in FIGS. 13B and 23B comprise one (1) single, continuous seal around all the periphery, the water window ports, and the interim window ports (P'), so that hydrogen can flow.

In contrast, the water side 104 of Plate B 113 shown in FIGS. 13D and 23D comprise three (3) total seals: 1) a single (1) full plate periphery seal (P+HW) that includes two hydrogen port window seals (HW) that are located around the four sides of the 4-window hydrogen ports, and 2) two (2) interim window port seals that are located outside of the hydrogen window seals (HI) but just around the outer three sides of the hydrogen port windows (HI). Additionally, the hydrogen side 106 of Plate B 113 shown in FIGS. 13C and 23C also comprise three (3) total seals: 1) a single full plate periphery seal (P+WW) that includes two water port window seals (WW) that are located around the four sides of the 3-window water ports, and 2) two interim window port seals that are located outside of the window seals (WW) but just around the outer three sides of the water port windows (WI).

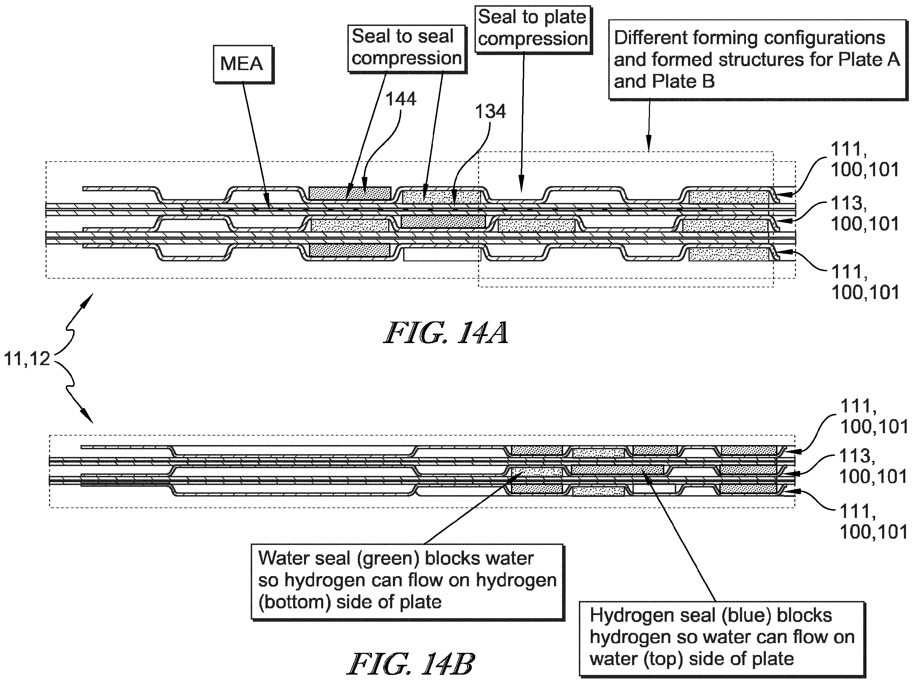

FIGS. 14A and 14B show Plate A 111 and Plate B 113 in a stack 11, 12 configuration. Specifically, FIG. 14A shows the different forming configurations to create the outer seal 144 and/or inner seal 134 for Plate A 111 and Plate B 113. FIGS. 14A and 14 B show the outer hydrogen or water seals 144 or outer water seals 144 having seal-to-seal alignment and/or compression in the stack 11, 12. In addition, FIGS. 14A and 14 B show clear outer seal-to-plate compression for both Plates A and B. The outer seal 144 and/or the inner seal 134 may be flat, as shown in FIGS. 14A and 14B, or may have a single or multiple projections, indentations, and/or bumps.

Each of the stack assembly 11, 12 embodiments described and shown in FIGS. 2-14B and 23A-23D comprise at least two different plate 100 and/or 101 formed structural configurations (e.g., a Type A 111 plate, Plate A 111, Type B 113 plate, Plate B 113). The complementary, offset, and/or alternating positioning of the distribution channels 112 and/or the main flow field channels 120 of the design configuration of the Type A 111 and Type B 113 plates and/or the Plates A and B 100 and/or 101 strengthen the stack assembly 11, 12 and prevent the plates 100 and/or 101 from bending and/or collapsing when stacked or assembled.

Specifically, the complementary, offset, and/or alternating design of the distribution channels 112 and/or the main flow field channels 120 of Types A and B and Plates A and B prevent the plates 100 and/or 101, and specifically the lands 128 or channels 112, 120, from bending or collapsing into one another when stacked. Therefore, this complementary, offset, and/or alternating plate stack 11, 12 configuration having plates 100 and/or 101 with different and/or complementary design features and configurations (e.g., seals, distribution channels, and/or main flow fields), such as Plate A 111 and Plate B 113, provides improved structural integrity of the electrolyzer stack 11, 12 that is maintained and/or preserved. The seal-to-seal alignment on the outer sealing area in the periphery of the plate 100 and/or 101 (e.g., the outer sealing area of the plate 100 and/or 101) or sheet 102 further contributes to the mechanical strength provided by at least two complementary plate 100 and/or 101 configurations.

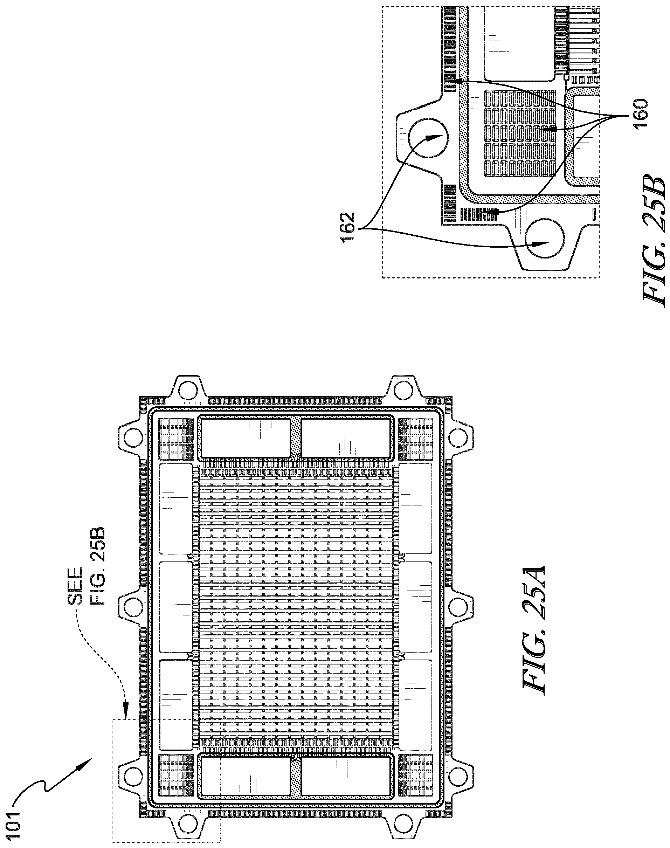

FIGS. 25A and 25B show additional forming features 160 that may help in providing improved plate stiffness and/or strength for the plate 101. Water and hydrogen pressure through the ports 108, 110 may be applied to the corner and the periphery of the plate 101. The additional forming features 160 provided on the plate 101 may increase the local stiffness. Thus, plate 101 strength may be enhanced due to the presence of the additional forming features 160 and the plate 101 may be able to accommodate higher pressure and load for the same thickness.

FIGS. 25A and 25B also show plate 101 comprising one or more alignment pins 162. Alignment pins 162 may be provided at the periphery of the plate 101 to accommodate vertical and horizontal stack 11, 12 assembly. The alignment pins 162 may accommodate additional plate 101 load in case of a horizontal stack 11, 12 and may also help the plate 101 alignment. Thus, plate 101 can be used for either horizontal or vertical stack assembly as the alignment pins 162 can maintain tight assembly tolerances to support both stacking orientations.

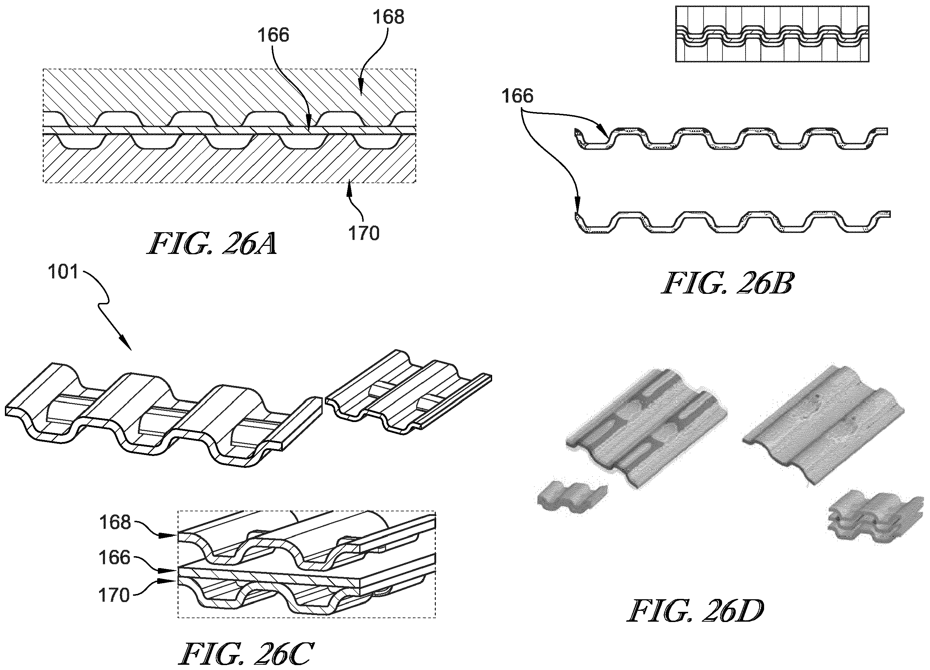

The structural and temperature integrity of the plate 101 was evaluated as shown in FIGS. 26A-26G. Various forming configurations of plate 101 were analyzed by considering different land width, groove width, pitch, internal & outer forming radius, forming angle etc. In addition, both stainless steel and titanium material was tested. Induced one or more stresses during forming was compared with the plate allowable stresses (e.g., titanium grade 1 minimum tensile strength is about 241 Mpa and stainless steel 316L minimum tensile strength is about 480 Mpa). Forming tolerances were also taken into consideration during the forming and/or manufacturing process.

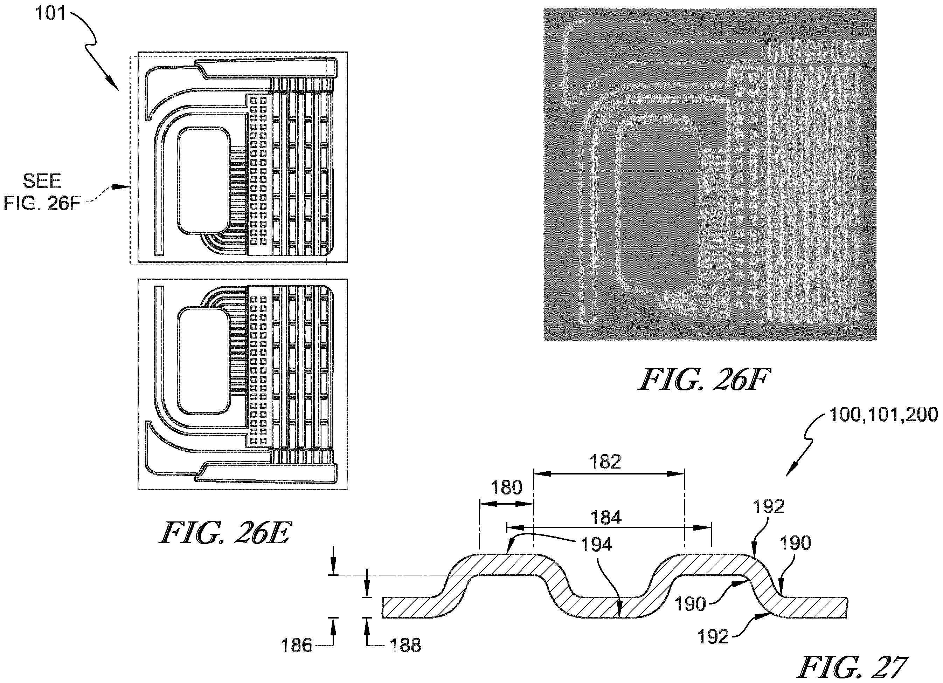

Further, the impact of various forming features were also analyzed with respect to an acceptance criteria of the soft membranes and overall stack performance and the optimum plate 101 features were selected based on those parameters. FIGS. 26A and 26B illustrate stress results during the formation of the plate 101 from a metal sheet 166 when using a tool 168 and a die 170. FIGS. 26C and 26D illustrate computational simulations of stress on the plate 101 during stack 11, 12 formation. FIG. 26E is an image of the manufactured plate 101. FIG. 26F illustrates a stress on a corner of the plate 101.

FIG. 27 is a cross-sectional view of a flow field and distribution area section 200 of one embodiment of the plate 100 and/or 101 identifying various design parameters of the plate 100 and/or 101. Specifically, the land width 180 of the plate 100 and/or 101 may range form about 0.3 mm to about 3 mm, including any width or range of width comprised therein. The groove width 182 of the plate 100 and/or 101 may range form about 0.5 mm to about 6 mm, including any width or range of width comprised therein. The pitch 184 of the plate 100 and/or 101 may range form about 0.8 mm to about 9 mm, including any width or range of width comprised therein. The groove depth 186 of the plate 100 and/or 101 may range form about 0.3 mm to about 2 mm, including any width or range of width comprised therein.

The plate thickness 188 of the plate 100 and/or 101 may range form about 0.1 mm to about 2 mm, including any width or range of width comprised therein (see FIG. 27). The inner radius 190 of the plate 100 and/or 101 may range form about 0.1 mm to about 1 mm, including any width or range of width comprised therein. The outer radius 192 of the plate 100 and/or 101 is the sum of the value of the inner radius 190 and the value of the plate thickness 188. Feature 194 of the plate 100 and/or 101 as shown in FIG. 27 is a flat region of the flow field and distribution area section 200 of the plate 100 and/or 101.

The present disclosure is also related to a method of making, forming, and/or manufacturing the formed structure of the single sheet bipolar plate 100 and/or 101 for stack 11, 12 assembly described herein. A formed structure of the single sheet bipolar plate 100 and/or 101 for stack 11, 12 assembly is the structure that is provided directly from the forming or form-making process (as described further below) with no further mechanical forming manipulations. An exemplary forming process of the present disclosure forms the formed structure of the single sheet bipolar plate 100 and/or 101 for stack 11, 12 assembly in a single forming process (e.g., that may have multiple stages) or multiple forming processes.

While any method of machine, material, and/or metal forming may be utilized to produce the formed structure of the present plate 100 and/or 101, a method of making, forming, and/or manufacturing the present plate 100 and/or 101 may include any stamping, printing, and/or forming method capable of taking a single sheet of formable material 102 (e.g. a metal) and creating or producing a two-sided, bipolar formed structure able to house and/or accommodate the anode 114 and cathode 116 fluid 124, 138 flow required for an electrochemical reaction, such as electrolysis. For example, a forming method to create the formed structure of the present plate 100 and/or 101 may include stamping, hydroforming, natural forming, parallel groove forming, rubber forming, roll forming, 3D printing, or progressive forming. The forming process of the present plate 100 and/or 101 may include any additive (e.g. 3D printing) or subtractive (e.g. chemical etching) manufacturing techniques.

An embodiment of the design, making, forming, and/or manufacturing method of the formed structure of the present single sheet bipolar plate 100 and/or 101 for stack 11, 12 assembly also considers the formability of the formable material 102 utilized. In particular, the number of structural features that may be formed into the single sheet of formable material 102 to produce the plate 100 and/or 101 must be considered. Specifically, the ratio of land (i.e., area of a side 104, 106 of the single sheet of material 102) to the grooves 130 (i.e., structural features comprising the channels 112, 120, the flange 132, the humps 140, the cavities 142, etc.) necessary to provide the requisite reactant channels 112, 120 as described herein while still maintaining mechanical support must be considered.

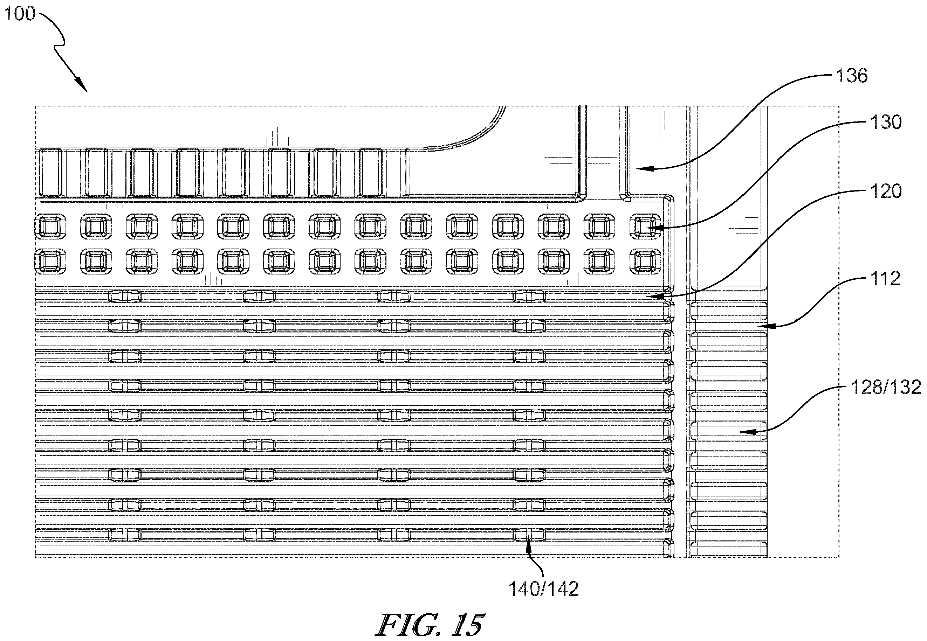

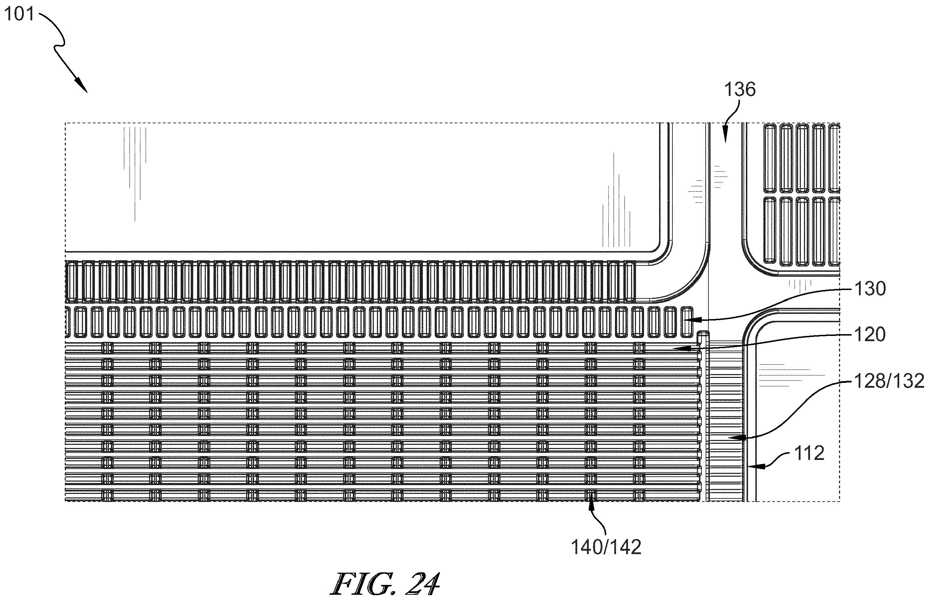

Accordingly, as shown in FIG. 15 and 24, the present method of designing, making, forming, and/or manufacturing the formed structure of the present single sheet bipolar plate 100 and/or 101 for stack 11, 12 assembly comprises maintaining the proper land: groove ratio. A proper land: groove ratio provides the appropriate mechanical support of the soft membrane electrolyte 118 and the plate 10, comprising the anode 114 and cathode 116, when within the stack 11, 12. Any depth and/or land: groove ratio may be utilized for the plate 100 and/or 101 as long as material properties of the formable material 102 provide the necessary load bearing capacity to support the soft membrane of the stack 11, 12.

The proper land: groove ratio of any formable material 102 must be specifically considered in the current methods of designing, making, forming, and/or manufacturing the present single sheet bipolar plate 100 and/or 101 for stack 11, 12 assembly. For example, titanium is a metal often used for making and/or manufacturing bipolar plates 100 and/or 101 for electrochemical cells that has an optimum depth of about 2 mm. An embodiment of formable material 102 used for designing, making, forming, and/or manufacturing the plate 100 and/or 101 could have any land: groove ratio, such as one that is about 1:1, 1:1.5, 1:2, 1:5, 1:10, etc. Notably, a radius and a curvature may be provided in the present methods to make, form, and/or manufacture the plate 100 and/or 101 in order to address the requirement for flow and seal management, better mechanical support, and form feasibility addressed with the land: groove ratio consideration of plate 100 and/or 101 formation.

The present method of designing, making, forming, and/or manufacturing the present single sheet bipolar plate 100 and/or 101 for stack 11, 12 assembly also comprises adding or applying seals 134, 144 to the formed structure or sealing the formed structure of the plate 100 and/or 101. In one embodiment, sealing the formed structure of the plate 100 and/or 101 is conducted after the structure has been formably created and/or produced by the forming and/or making process described above. In an exemplary embodiment, sealing comprises applying seals 134, 144 to the flange 132, groove 130, land 128, channels 112, 120, sides 104, 106, and/or any other structural component or feature of the plate 100 and/or 101.

Subsequent to the completion of the forming of the formed structure of the plate 100 and/or 101, sealing the plate 100 and/or 101 includes mechanically, robotically, and/or manually adding, applying, placing, and/or positioning onto any and/or all regions of the plate 100 and/or 101 as necessary to achieve fluid 124, 138 flow. In an alternative embodiment, seals may be added or applied to the formed structure of the plate 100 and/or 101 before the formed structure is completed (e.g., while or as the formed structure is being formed).

For example, sealing may comprise applying seal 134, 144 in any sealing configuration, position, and/or location necessary to achieve operational fluid 124, 138 for the plate 100 and/or 101. Specifically, seals 134, 144 and/or specific sealing configurations and/or designs may be configured into the plate 100 and/or 101 design or structure in order to enable and/or improve fluid 124, 138 flow. Importantly and additionally, seals 134, 144 are utilized in the present system and methods to provide a closed system that may include multiple flow fields and/or channels 112, 120 of varying depths.

While varying depths or a variable groove 130 depth may comprise different depths in different channels 112, 120, as referred to herein, the phrase "variable groove depth" refers to the capability of the present plate 100 and/or 101 to utilize two sides of a single sheet of material to provide a number of closed and separate flow fields or channels 112, 120 that have varying or different depths along their continuous flow paths (e.g., from the inlets our in ports 108 to the outlets our out ports 110. In the exemplary embodiment, the variable groove depth is enabled by the plate 100 and/or 101 configuration (e.g., the flange 132) coupled with the seal 134, 144.

For example and as previously described, inner seals 134 may be added to the flange 132 region of the groove 130 or land 128 in order to close and/or seal that region and further effect or change the amount or direction of fluid 124, 138 flow. Similarly, outer seals 144 may be added to the periphery of the plate 100 and/or 101 to enable seal-to-seal and/or plate-to-plate contact and/or alignment when multiple plates 100 and/or 101 are comprised in a stack 11, 12 assembly.

The above embodiments are described in sufficient detail to enable those skilled in the art to practice what is claimed and it is to be understood that other embodiments may be utilized and that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated.

Furthermore, references to "one embodiment" of the presently described subject matter are not intended to be interpreted as excluding the existence of additional embodiments that also incorporate the recited features. Specified numerical ranges of units, measurements, and/or values include, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third," and the like, as used herein do not denote any order or importance, but rather are used to distinguish one element from another. The term "or" and "and/or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps. The phrase "consisting of' or "consists of" refers to a compound, composition, formulation, or method that excludes the presence of any additional elements, components, or method steps.

The term "consisting of" also refers to a compound, composition, formulation, or method of the present disclosure that excludes the presence of any additional elements, components, or method steps. The phrase "consisting essentially of' or "consists essentially of" refers to a composition, compound, formulation, or method that is inclusive of additional elements, components, or method steps that do not materially affect the characteristic(s) of the composition, compound, formulation, or method. The phrase "consisting essentially of" also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A electrochemical cell bipolar plate for stack assembly comprising:
a single sheet of formable material having an anode side and a cathode side opposite the anode side, wherein the anode side and the cathode side have a different structural configuration,
a plurality of water channels on the anode side,
a plurality of hydrogen channels on the cathode side,
wherein the water channels and the hydrogen channels have a cross-flow configuration,
a plurality of lands configured to provide the water channels and the hydrogen channels, wherein each of the lands comprise a groove and a flange, and
a seal positioned within the flange to provide a variable groove depth for the land.

2. The electrochemical cell bipolar assembly plate of claim 1, wherein two or more of the plurality of grooves comprise sealing grooves.

3. The electrochemical cell bipolar assembly plate of claim 1 or claim 2, wherein the water channels comprise water distribution channels or water main flow field channels.

4. The electrochemical cell bipolar assembly plate of any of claims 1 to 3, wherein the hydrogen channels comprise hydrogen distribution channels or hydrogen main flow field channels.

5. The electrochemical cell bipolar assembly plate of any of claims 1 to 4, wherein the seal is an inner seal or an outer seal.

6. The electrochemical cell bipolar assembly plate of any of claims 1 to 5, wherein the seal closes the anode side and the cathode side of the electrochemical cell bipolar assembly plate to form a closed system.

7. A electrochemical cell bipolar plate for stack assembly comprising:
a single sheet of formable material having an anode side and a cathode side opposite the anode side, wherein the anode side and the cathode side have a different structural configuration,
a plurality of water channels comprising a plurality of humps on the anode side,
a plurality of hydrogen channels comprising a plurality of cavities on the cathode side, wherein the water channels and the hydrogen channels have a cross-flow configuration that improves thermal management and heat transfer of one or more fluids in the plate.

8. The electrochemical cell bipolar assembly plate of claim 7, wherein the formable material comprises a metallic or non-metallic electrically conductive material.

9. The electrochemical cell bipolar assembly plate of claim 8, wherein the metallic electrically conductive material comprises titanium, nickel, aluminum, steel, or combinations thereof.

10. The electrochemical cell bipolar assembly plate of any of claims 7 to 9, wherein the different configuration comprises an offset configuration or a complementary configuration.

11. The electrochemical cell bipolar assembly plate of any of claims 7 to 10, wherein the water channels comprise water distribution channels or water main flow field channels.

12. The electrochemical cell bipolar assembly plate of any of claims 7 to 11, wherein the hydrogen channels comprise hydrogen distribution channels or hydrogen main flow field channels.

13. A method of making a single sheet bipolar plate for stack assembly, comprising:
forming a single sheet of formable material in a single forming process to create a formed structure having an anode side and a cathode side each comprising a plurality of fluid distributions channels and main flow field channels,
wherein each of the fluid distribution channels comprise a groove, a flange, and a land, and each of the main flow field channels comprise a plurality of humps and cavities, and
sealing the fluid distribution channels or the main flow field channels to create a closed system.

14. The method of claim 13, wherein the sealing is performed by applying a seal to the flange, the groove, or the land of the distribution channels.

15. The method of claim 13 or claim 14, wherein the sealing is performed by parallel groove forming.
